# EUROPEAN PATENT APPLICATION

(11) **EP 4 343 574 A1**
(43) Date of publication of application: **27.03.2024**
(21) Application number: 21943599.7
(22) Date of filing: 04.06.2021
(51) Int. Cl.: G06F 16/29

(54) **3D MAP COMPRESSION METHOD AND APPARATUS, AND 3D MAP DECOMPRESSION METHOD AND APPARATUS**

(71) Applicant: Huawei Technologies Co., Ltd., Shenzhen, Guangdong 518129 (CN)
(72) Inventor: CAI, Kangying, Shenzhen, Guangdong 518129 (CN); TU, Chenxi, Shenzhen, Guangdong 518129 (CN); CAO, Xiaoran, Shenzhen, Guangdong 518129 (CN); WANG, Pei, Shenzhen, Guangdong 518129 (CN)
(74) Representative: Gill Jennings & Every LLP
(86) International application number: PCT/CN2021/098486
(87) International publication number: WO 2022/252238

(57) **Abstract**

Methods and apparatuses for compressing and decompressing a 3D map are provided, to reduce a data amount of the 3D map, and this application relates to the field of 3D map technologies. The method for compressing a 3D map includes: obtaining a plurality of 3D map point spatial locations and a plurality of 3D map point descriptors (S101); determining a correspondence between the plurality of 3D map point spatial locations and the plurality of 3D map point descriptors, where the correspondence represents that a 3D map point spatial location and a 3D map point descriptor correspond to a same 3D map point (S102); and performing compression processing on the plurality of 3D map point spatial locations and the plurality of 3D map point descriptors based on the correspondence, or performing compression processing on the plurality of 3D map point spatial locations, the plurality of 3D map point descriptors, and the correspondence, to obtain compressed data of a plurality of 3D map points (S103). In this method, storage space used for storing the 3D map can be reduced, or transmission resources used for transmitting the 3D map can be reduced.

## Description

### TECHNICAL FIELD

This application relates to 3D map technologies, and in particular, to methods and apparatuses for compressing and decompressing a 3D map.

### BACKGROUND

Virtual reality (virtual reality, VR), augmented reality (augmented reality, AR), and mixed reality (mixed reality, MR) technologies are multimedia virtual scene technologies that emerge in recent years. With these technologies, virtual reality can be created, and virtual reality is superposed with the real world, to create a new visual environment and interaction experience. In such an application, an electronic device needs to determine pose information of the electronic device in a current environment, to accurately implement fusion between a virtual object and a real scene.

In addition, in applications such as autonomous driving, autonomous navigation, automatic inspection of an uncrewed aerial vehicle, and industrial robot, a vehicle such as an automobile, an uncrewed aerial vehicle, or a robot needs to determine a pose of the vehicle in a current environment by determining a pose of an electronic device mounted on the vehicle, so as to perform accurate path planning, navigation, detection, and control.

A typical solution to the problem that the pose of the electronic device in the current environment needs to be determined for the foregoing applications is as follows: The electronic device receives, from a server or another device, a three-dimensional (3-dimensional, 3D) map of the environment in which the electronic device is located, then captures visual information in the environment by using a local sensor, and determines the current pose of the electronic device based on the captured visual information and the downloaded 3D map.

However, the original 3D map usually includes a large amount of data, and transmission of the map is bandwidth- and time-consuming. This greatly limits application performance and affects user experience.

### SUMMARY

This application provides methods and apparatuses for compressing and decompressing a 3D map, to reduce a data amount of the 3D map, thereby reducing storage space used for storing the 3D map or reducing transmission resources used for transmitting the 3D map.

According to a first aspect, an embodiment of this application provides a method for compressing a 3D map. The method may include: obtaining a plurality of 3D map point spatial locations and a plurality of 3D map point descriptors, where any one of the plurality of 3D map point spatial locations corresponds to one 3D map point in the 3D map, and any one of the plurality of 3D map point descriptors corresponds to one 3D map point in the 3D map; determining a correspondence between the plurality of 3D map point spatial locations and the plurality of 3D map point descriptors, where the correspondence represents that a 3D map point spatial location and a 3D map point descriptor correspond to a same 3D map point; and performing compression processing on the plurality of 3D map point spatial locations, the plurality of 3D map point descriptors, and the correspondence (an explicit compression manner of the correspondence is used in compression processing), to obtain compressed data of a plurality of 3D map points; or performing compression processing on the plurality of 3D map point spatial locations and the plurality of 3D map point descriptors based on the correspondence (an implicit compression manner of the correspondence is used in compression processing), to obtain compressed data of a plurality of 3D map points.

In this implementation, the compressed data of the plurality of 3D map points is obtained through compression processing. In this way, the data amount of the 3D map can be reduced, for example, from a Terabyte (Terabyte, TB) level to a Gigabyte (Gigabyte, GB) level. In the explicit or implicit compression manner of the correspondence, when the compressed data is decompressed, the correspondence can be restored, to obtain reconstructed data of the 3D map. When the data amount of the 3D map is reduced, the storage space used for storing the 3D map or the transmission resources used for transmitting the 3D map can be correspondingly reduced.

In a possible design, the performing compression processing on the plurality of 3D map point spatial locations, the plurality of 3D map point descriptors, and the correspondence may include: determining correspondence indication information based on the correspondence between the plurality of 3D map point spatial locations and the plurality of 3D map point descriptors, the plurality of 3D map point spatial locations or a plurality of re-sorted 3D map point spatial locations, and the plurality of 3D map point descriptors or a plurality of re-sorted 3D map point descriptors, where the correspondence indication information indicates a correspondence between a 3D map point spatial location and a 3D map point descriptor; and separately performing compression processing on the plurality of 3D map point spatial locations or the plurality of re-sorted 3D map point spatial locations, the plurality of 3D map point descriptors or the plurality of re-sorted 3D map point descriptors, and the correspondence indication information.

In a possible design, the correspondence indication information includes first correspondence indication information of at least one 3D map point. The first correspondence indication information indicates a location of a 3D map point descriptor in the plurality of 3D map point descriptors or the plurality of re-sorted 3D map point descriptors, where the 3D map point descriptor corresponds to at least one of the plurality of 3D map point spatial locations or the plurality of re-sorted 3D map point spatial locations.

In a possible design, the correspondence indication information includes second correspondence indication information of at least one 3D map point. The second correspondence indication information indicates a location of a 3D map point spatial location in the plurality of 3D map point spatial locations or the plurality of re-sorted 3D map point spatial locations, where the 3D map point spatial location corresponds to at least one of the plurality of 3D map point descriptors or the plurality of re-sorted 3D map point descriptors.

In a possible design, the correspondence indication information includes first correspondence indication information of at least one 3D map point and second correspondence indication information of at least one 3D map point. The first correspondence indication information indicates a location of a 3D map point descriptor in the plurality of 3D map point descriptors or the plurality of re-sorted 3D map point descriptors, where the 3D map point descriptor corresponds to at least one of the plurality of 3D map point spatial locations or the plurality of re-sorted 3D map point spatial locations. The second correspondence indication information indicates a location of a 3D map point spatial location in the plurality of 3D map point spatial locations or the plurality of re-sorted 3D map point spatial locations, where the 3D map point spatial location corresponds to at least one of the plurality of 3D map point descriptors or the plurality of re-sorted 3D map point descriptors.

In a possible design, the plurality of 3D map points include at least one first 3D map point and at least one second 3D map point, and the correspondence indication information includes first correspondence indication information of the at least one first 3D map point and second correspondence indication information of the at least one second 3D map point.

In a possible design, the correspondence indication information further includes flag bit information, and the flag bit information indicates the first correspondence indication information of the at least one first 3D map point or the second correspondence indication information of the at least one second 3D map point.

In a possible design, the plurality of 3D map points include a current 3D map point, and the method may further include: determining a first residual of the current 3D map point based on first correspondence indication information of the current 3D map point and first correspondence indication information of at least one compressed 3D map point; determining a second residual of the current 3D map point based on second correspondence indication information of the current 3D map point and second correspondence indication information of the at least one compressed 3D map point; and determining correspondence indication information of the current map point based on the first residual and the second residual.

In a possible design, the determining correspondence indication information of the current map point based on the first residual and the second residual may include: if the first residual is less than or equal to the second residual, determining that the correspondence indication information of the current map point is the first residual of the current map point; or if the first residual is greater than the second residual, determining that the correspondence indication information of the current map point is the second residual of the current map point.

In a possible design, the correspondence indication information includes third correspondence indication information of at least one 3D map point and fourth correspondence indication information of at least one 3D map point. The third correspondence indication information indicates a location that is of a 3D map point descriptor corresponding to at least one of the plurality of 3D map point spatial locations or the plurality of re-sorted 3D map point spatial locations and that is in a reference sequence. The fourth correspondence indication information indicates a location that is of a 3D map point spatial location corresponding to at least one of the plurality of 3D map point descriptors or the plurality of re-sorted 3D map point descriptors and that is in the reference sequence.

In a possible design, the performing compression processing on the plurality of 3D map point spatial locations and the plurality of 3D map point descriptors based on the correspondence may include: re-sorting the plurality of 3D map point descriptors based on the correspondence between the plurality of 3D map point spatial locations and the plurality of 3D map point descriptors, to obtain a plurality of re-sorted 3D map point descriptors; and performing compression processing on the plurality of 3D map point spatial locations and the plurality of re-sorted 3D map point descriptors. To be specific, 3D map point spatial locations respectively corresponding to the plurality of 3D map point descriptors are obtained based on the correspondence between the plurality of 3D map point spatial locations and the plurality of 3D map point descriptors, and the plurality of 3D map point descriptors are re-sorted based on the 3D map point spatial locations respectively corresponding to the plurality of 3D map point descriptors. That is, an order of the 3D map point descriptors is determined based on the 3D map point spatial locations.

The performing compression processing on the plurality of 3D map point spatial locations and the plurality of re-sorted 3D map point descriptors may include: re-sorting the plurality of 3D map point spatial locations (re-sorting herein may be independent re-sorting), to obtain a plurality of re-sorted 3D map point spatial locations, and performing compression processing on the plurality of re-sorted 3D map point spatial locations and the plurality of re-sorted 3D map point descriptors.

Alternatively, the performing compression processing on the plurality of 3D map point spatial locations and the plurality of 3D map point descriptors based on the correspondence may include: re-sorting the plurality of 3D map point spatial locations based on the correspondence between the plurality of 3D map point spatial locations and the plurality of 3D map point descriptors, to obtain a plurality of re-sorted 3D map point spatial locations; and performing compression processing on the plurality of 3D map point descriptors and the plurality of re-sorted 3D map point spatial locations. To be specific, 3D map point descriptors respectively corresponding to the plurality of 3D map point spatial locations are obtained based on the correspondence between the plurality of 3D map point spatial locations and the plurality of 3D map point descriptors, and the plurality of 3D map point spatial locations are re-sorted based on the 3D map point descriptors respectively corresponding to the plurality of 3D map point spatial locations. That is, an order of the 3D map point spatial locations is determined based on the 3D map point descriptors.

The performing compression processing on the plurality of 3D map point descriptors and the plurality of re-sorted 3D map point spatial locations may include: re-sorting the plurality of 3D map point descriptors (re-sorting herein may be independent re-sorting), to obtain a plurality of re-sorted 3D map point descriptors, and performing compression processing on the plurality of re-sorted 3D map point descriptors and the plurality of re-sorted 3D map point spatial locations.

In a possible design, the method may further include: encapsulating the compressed data of the plurality of 3D map points, to obtain a bitstream of the 3D map.

In a possible design, an execution body of the foregoing method may be a server, and the foregoing method may further include: The server receives 3D map request information sent by an electronic device, and sends, to the electronic device in response to the 3D map request information, a bitstream that is of the 3D map and that corresponds to the 3D map request information; or, the execution body of the foregoing method may be the electronic device, and the foregoing method may further include: The electronic device sends the bitstream of the 3D map to the server. The electronic device may be a user terminal device or an electronic device mounted on a vehicle.

According to a second aspect, an embodiment of this application provides a method for decompressing a 3D map. The method may include: decompressing compressed data of a plurality of 3D map points, to obtain a plurality of 3D map point spatial locations and a plurality of 3D map point descriptors, where any one of the plurality of 3D map point spatial locations corresponds to one 3D map point in the 3D map, and any one of the plurality of 3D map point descriptors corresponds to one 3D map point in the 3D map; determining a correspondence between the plurality of 3D map point spatial locations and the plurality of 3D map point descriptors, where the correspondence represents that a 3D map point spatial location and a 3D map point descriptor correspond to a same 3D map point; and obtaining reconstructed data of the 3D map based on the plurality of 3D map point spatial locations, the plurality of 3D map point descriptors, and the correspondence.

In a possible design, the decompressing compressed data of a plurality of 3D map points, to obtain a plurality of 3D map point spatial locations and a plurality of 3D map point descriptors may include: decompressing the compressed data of the plurality of 3D map points, to obtain the plurality of 3D map point spatial locations, the plurality of 3D map point descriptors, and correspondence indication information, where the correspondence indication information indicates a correspondence between a 3D map point spatial location and a 3D map point descriptor. Correspondingly, the determining a correspondence between the plurality of 3D map point spatial locations and the plurality of 3D map point descriptors may include: determining the correspondence between the plurality of 3D map point spatial locations and the plurality of 3D map point descriptors based on the correspondence indication information.

In a possible design, the correspondence indication information includes first correspondence indication information of at least one 3D map point; and the first correspondence indication information indicates a location that is of a 3D map point descriptor corresponding to at least one of the plurality of 3D map point spatial locations and that is in the plurality of 3D map point descriptors.

In a possible design, the correspondence indication information includes second correspondence indication information of at least one 3D map point; and the second correspondence indication information indicates a location that is of a 3D map point spatial location corresponding to at least one of the plurality of 3D map point descriptors and that is in the plurality of 3D map point spatial locations.

In a possible design, the correspondence indication information includes first correspondence indication information of at least one 3D map point and second correspondence indication information of at least one 3D map point; the first correspondence indication information indicates a location that is of a 3D map point descriptor corresponding to at least one of the plurality of 3D map point spatial locations and that is in the plurality of 3D map point descriptors; and the second correspondence indication information indicates a location that is of a 3D map point spatial location corresponding to at least one of the plurality of 3D map point descriptors and that is in the plurality of 3D map point spatial locations.

In a possible design, the plurality of 3D map points include at least one first 3D map point and at least one second 3D map point, and the correspondence indication information includes first correspondence indication information of the at least one first 3D map point and second correspondence indication information of the at least one second 3D map point.

In a possible design, the correspondence indication information further includes flag bit information, and the flag bit information indicates the first correspondence indication information of the at least one first 3D map point or the second correspondence indication information of the at least one second 3D map point.

In a possible design, the correspondence indication information includes third correspondence indication information of at least one 3D map point and fourth correspondence indication information of at least one 3D map point; the third correspondence indication information indicates a location that is of a 3D map point descriptor corresponding to at least one of the plurality of 3D map point spatial locations and that is in a reference sequence; and the fourth correspondence indication information indicates a location that is of a 3D map point spatial location corresponding to at least one of the plurality of 3D map point descriptors and that is in the reference sequence.

In a possible design, the determining a correspondence between the plurality of 3D map point spatial locations and the plurality of 3D map point descriptors may include: determining the correspondence between the plurality of 3D map point spatial locations and the plurality of 3D map point descriptors based on an order of the plurality of 3D map point descriptors and the plurality of 3D map point spatial locations; or determining the correspondence between the plurality of 3D map point spatial locations and the plurality of 3D map point descriptors based on an order of the plurality of 3D map point spatial locations and the plurality of 3D map point descriptors.

In a possible design, the method may further include: decapsulating a bitstream of the 3D map, to obtain the compressed data of the plurality of 3D map points.

In a possible design, the method may further include: sending 3D map request information to a server, and receiving a bitstream that is of the 3D map, that corresponds to the 3D map request information, and that is sent by the server; or receiving the bitstream that is of the 3D map and that is sent by an electronic device.

According to a third aspect, this application provides an apparatus for compressing a 3D map. The apparatus may be a chip or a system on chip in an electronic device or a server, or may be a functional module configured to implement the method in the first aspect or any possible implementation of the first aspect in the electronic device or the server. For example, the apparatus for compressing a 3D map includes: a compression module, configured to: obtain a plurality of 3D map point spatial locations and a plurality of 3D map point descriptors, where any one of the plurality of 3D map point spatial locations corresponds to one 3D map point in the 3D map, and any one of the plurality of 3D map point descriptors corresponds to one 3D map point in the 3D map; determine a correspondence between the plurality of 3D map point spatial locations and the plurality of 3D map point descriptors, where the correspondence represents that a 3D map point spatial location and a 3D map point descriptor correspond to a same 3D map point; and perform compression processing on the plurality of 3D map point spatial locations, the plurality of 3D map point descriptors, and the correspondence, or perform compression processing on the plurality of 3D map point spatial locations and the plurality of 3D map point descriptors based on the correspondence, to obtain compressed data of a plurality of 3D map points; and a storage module, configured to store the compressed data of the plurality of 3D map points; or an encapsulation module, configured to encapsulate the compressed data of the plurality of 3D map points, to obtain a bitstream of the 3D map.

In a possible design, the compression module is configured to: determine correspondence indication information based on the correspondence between the plurality of 3D map point spatial locations and the plurality of 3D map point descriptors, the plurality of 3D map point spatial locations or a plurality of re-sorted 3D map point spatial locations, and the plurality of 3D map point descriptors or a plurality of re-sorted 3D map point descriptors, where the correspondence indication information indicates a correspondence between a 3D map point spatial location and a 3D map point descriptor; and separately perform compression processing on the plurality of 3D map point spatial locations or the plurality of re-sorted 3D map point spatial locations, the plurality of 3D map point descriptors or the plurality of re-sorted 3D map point descriptors, and the correspondence indication information.

In a possible design, the correspondence indication information includes first correspondence indication information of at least one 3D map point; and the first correspondence indication information indicates a location of a 3D map point descriptor in the plurality of 3D map point descriptors or the plurality of re-sorted 3D map point descriptors, where the 3D map point descriptor corresponds to at least one of the plurality of 3D map point spatial locations or the plurality of re-sorted 3D map point spatial locations.

In a possible design, the correspondence indication information includes second correspondence indication information of at least one 3D map point; and the second correspondence indication information indicates a location of a 3D map point spatial location in the plurality of 3D map point spatial locations or the plurality of re-sorted 3D map point spatial locations, where the 3D map point spatial location corresponds to at least one of the plurality of 3D map point descriptors or the plurality of re-sorted 3D map point descriptors.

In a possible design, the correspondence indication information includes first correspondence indication information of at least one 3D map point and second correspondence indication information of at least one 3D map point; the first correspondence indication information indicates a location of a 3D map point descriptor in the plurality of 3D map point descriptors or the plurality of re-sorted 3D map point descriptors, where the 3D map point descriptor corresponds to at least one of the plurality of 3D map point spatial locations or the plurality of re-sorted 3D map point spatial locations; and the second correspondence indication information indicates a location of a 3D map point spatial location in the plurality of 3D map point spatial locations or the plurality of re-sorted 3D map point spatial locations, where the 3D map point spatial location corresponds to at least one of the plurality of 3D map point descriptors or the plurality of re-sorted 3D map point descriptors.

In a possible design, the plurality of 3D map points include at least one first 3D map point and at least one second 3D map point, and the correspondence indication information includes first correspondence indication information of the at least one first 3D map point and second correspondence indication information of the at least one second 3D map point.

In a possible design, the correspondence indication information further includes flag bit information, and the flag bit information indicates the first correspondence indication information of the at least one first 3D map point or the second correspondence indication information of the at least one second 3D map point.

In a possible design, the plurality of 3D map points include a current 3D map point, and the compression module is further configured to: determine a first residual of the current 3D map point based on first correspondence indication information of the current 3D map point and first correspondence indication information of at least one compressed 3D map point; determine a second residual of the current 3D map point based on second correspondence indication information of the current 3D map point and second correspondence indication information of the at least one compressed 3D map point; and determine correspondence indication information of the current map point based on the first residual and the second residual.

In a possible design, the compression module is configured to: if the first residual is less than or equal to the second residual, determine that the correspondence indication information of the current map point is the first residual of the current map point; or if the first residual is greater than the second residual, determine that the correspondence indication information of the current map point is the second residual of the current map point.

In a possible design, the correspondence indication information includes third correspondence indication information of at least one 3D map point and fourth correspondence indication information of at least one 3D map point; the third correspondence indication information indicates a location that is of a 3D map point descriptor corresponding to at least one of the plurality of 3D map point spatial locations or the plurality of re-sorted 3D map point spatial locations and that is in a reference sequence; and the fourth correspondence indication information indicates a location that is of a 3D map point spatial location corresponding to at least one of the plurality of 3D map point descriptors or the plurality of re-sorted 3D map point descriptors and that is in the reference sequence.

In a possible design, the compression module is configured to: re-sort the plurality of 3D map point descriptors based on the correspondence between the plurality of 3D map point spatial locations and the plurality of 3D map point descriptors, to obtain a plurality of re-sorted 3D map point descriptors; and perform compression processing on the plurality of 3D map point spatial locations and the plurality of re-sorted 3D map point descriptors; or re-sort the plurality of 3D map point spatial locations based on the correspondence between the plurality of 3D map point spatial locations and the plurality of 3D map point descriptors, to obtain a plurality of re-sorted 3D map point spatial locations; and perform compression processing on the plurality of 3D map point descriptors and the plurality of re-sorted 3D map point spatial locations.

In a possible design, the apparatus further includes a transmission module, configured to: receive 3D map request information sent by an electronic device, and send, to the electronic device in response to the 3D map request information, a bitstream that is of the 3D map and that corresponds to the 3D map request information; or send the bitstream of the 3D map to a server.

According to a fourth aspect, this application provides an apparatus for decompressing a 3D map. The apparatus may be a chip or a system on chip in an electronic device or a server, or may be a functional module configured to implement the method in the second aspect or any possible implementation of the second aspect in the electronic device or the server. For example, the apparatus for decompressing a 3D map includes: a decompression module, configured to obtain compressed data of a plurality of 3D map points from a storage module, or obtain the compressed data of the plurality of 3D map points by using a decapsulation module; and the decompression module is further configured to: decompress the compressed data of the plurality of 3D map points, to obtain a plurality of 3D map point spatial locations and a plurality of 3D map point descriptors, where any one of the plurality of 3D map point spatial locations corresponds to one 3D map point in the 3D map, and any one of the plurality of 3D map point descriptors corresponds to one 3D map point in the 3D map; determine a correspondence between the plurality of 3D map point spatial locations and the plurality of 3D map point descriptors, where the correspondence represents that a 3D map point spatial location and a 3D map point descriptor correspond to a same 3D map point; and obtain reconstructed data of the 3D map based on the plurality of 3D map point spatial locations, the plurality of 3D map point descriptors, and the correspondence.

In a possible design, the decompression module is configured to: decompress the compressed data of the plurality of 3D map points, to obtain the plurality of 3D map point spatial locations, the plurality of 3D map point descriptors, and correspondence indication information, where the correspondence indication information indicates a correspondence between a 3D map point spatial location and a 3D map point descriptor; and determine the correspondence between the plurality of 3D map point spatial locations and the plurality of 3D map point descriptors based on the correspondence indication information.

In a possible design, the correspondence indication information includes first correspondence indication information of at least one 3D map point; and the first correspondence indication information indicates a location that is of a 3D map point descriptor corresponding to at least one of the plurality of 3D map point spatial locations and that is in the plurality of 3D map point descriptors.

In a possible design, the correspondence indication information includes second correspondence indication information of at least one 3D map point; and the second correspondence indication information indicates a location that is of a 3D map point spatial location corresponding to at least one of the plurality of 3D map point descriptors and that is in the plurality of 3D map point spatial locations.

In a possible design, the correspondence indication information includes first correspondence indication information of at least one 3D map point and second correspondence indication information of at least one 3D map point; the first correspondence indication information indicates a location that is of a 3D map point descriptor corresponding to at least one of the plurality of 3D map point spatial locations and that is in the plurality of 3D map point descriptors; and the second correspondence indication information indicates a location that is of a 3D map point spatial location corresponding to at least one of the plurality of 3D map point descriptors and that is in the plurality of 3D map point spatial locations.

In a possible design, the plurality of 3D map points include at least one first 3D map point and at least one second 3D map point, and the correspondence indication information includes first correspondence indication information of the at least one first 3D map point and second correspondence indication information of the at least one second 3D map point.

In a possible design, the correspondence indication information further includes flag bit information, and the flag bit information indicates the first correspondence indication information of the at least one first 3D map point or the second correspondence indication information of the at least one second 3D map point.

In a possible design, the correspondence indication information includes third correspondence indication information of at least one 3D map point and fourth correspondence indication information of at least one 3D map point; the third correspondence indication information indicates a location that is of a 3D map point descriptor corresponding to at least one of the plurality of 3D map point spatial locations and that is in a reference sequence; and the fourth correspondence indication information indicates a location that is of a 3D map point spatial location corresponding to at least one of the plurality of 3D map point descriptors and that is in the reference sequence.

In a possible design, the decompression module is configured to: determine the correspondence between the plurality of 3D map point spatial locations and the plurality of 3D map point descriptors based on an order of the plurality of 3D map point descriptors and the plurality of 3D map point spatial locations; or determine the correspondence between the plurality of 3D map point spatial locations and the plurality of 3D map point descriptors based on an order of the plurality of 3D map point spatial locations and the plurality of 3D map point descriptors.

In a possible design, the decapsulation module is configured to decapsulate a bitstream of the 3D map, to obtain the compressed data of the plurality of 3D map points.

In a possible design, the apparatus further includes a transmission module, configured to: send 3D map request information to a server, and receive a bitstream that is of the 3D map, that corresponds to the 3D map request information, and that is sent by the server; or receive the bitstream that is of the 3D map and that is sent by an electronic device.

According to a fifth aspect, an embodiment of this application provides an apparatus for compressing a 3D map, including: one or more processors; and a memory, configured to store one or more programs, where when the one or more programs are executed by the one or more processors, the one or more processors are enabled to implement the method according to the first aspect or any possible design of the first aspect.

According to a sixth aspect, an embodiment of this application provides an apparatus for decompressing a 3D map, including: one or more processors; and a memory, configured to store one or more programs, where when the one or more programs are executed by the one or more processors, the one or more processors are enabled to implement the method according to the second aspect or any possible design of the second aspect.

According to a seventh aspect, an embodiment of this application provides a computer-readable storage medium, including a computer program, where when the computer program is executed on a computer, the computer is enabled to perform the method according to the first aspect or any possible design of the first aspect, or perform the method according to the second aspect or any possible design of the second aspect.

According to an eighth aspect, this application provides a computer program or a computer program product, where when the computer program or the computer program product is executed on a computer, the computer is enabled to implement the method according to any one of the first aspect, the second aspect, and the possible implementations of the first aspect and the second aspect.

It should be understood that the technical solutions in the third to the seventh aspects of this application are consistent with those in the first aspect and the second aspect. Beneficial effects achieved in the various aspects and corresponding feasible implementations are similar. Details are not described again.

### BRIEF DESCRIPTION OF DRAWINGS

FIG. 1 is a schematic diagram of an application architecture according to an embodiment of this application;
FIG. 2 is a schematic diagram of a structure of an electronic device 20 according to an embodiment of this application;
FIG. 3 is a schematic diagram of a structure of a server 30 according to an embodiment of this application;
FIG. 4a to FIG. 4f are schematic diagrams of an application scenario according to an embodiment of this application;
FIG. 4g is a schematic diagram of a user interface displayed by an electronic device according to an embodiment of this application;
FIG. 5 is a schematic flowchart of a method for compressing a 3D map according to an embodiment of this application;
FIG. 6 is a schematic flowchart of a method for decompressing a 3D map according to an embodiment of this application;
FIG. 7 is a schematic flowchart of a method for encoding and decoding a 3D map according to an embodiment of this application;
FIG. 8 is a schematic flowchart of a method for encoding and decoding a 3D map according to an embodiment of this application;
FIG. 9 is a schematic flowchart of a method for encoding and decoding a 3D map according to an embodiment of this application;
FIG. 10 is a schematic flowchart of a method for encoding and decoding a 3D map according to an embodiment of this application;
FIG. 11 is a schematic diagram of a structure of an apparatus for compressing a 3D map according to an embodiment of this application;
FIG. 12 is a schematic diagram of a structure of an apparatus for decompressing a 3D map according to an embodiment of this application; and
FIG. 13 is a schematic block diagram of a decoding apparatus 1300 according to an embodiment of this application.

### DESCRIPTION OF EMBODIMENTS

The following describes embodiments of this application with reference to the accompanying drawings in embodiments of this application. Terms used in embodiments of this application are only used to explain specific embodiments of this application, but are not intended to limit this application.

In this specification, embodiments, claims, and accompanying drawings of this application, terms "first", "second", and the like are merely intended for distinguishing and description, and shall not be understood as an indication or implication of relative importance or an indication or implication of an order. In addition, the terms "include", "have", and any variant thereof are intended to cover non-exclusive inclusion, for example, inclusion of a series of steps or units. A method, a system, a product, or a device is not necessarily limited to clearly listed steps or units, but may include other steps or units that are not clearly listed or that are inherent to the process, the method, the product, or the device.

It should be understood that, in this application, "at least one (item)" means one or more, and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural.

In embodiments of this application, the word "exemplary", "for example", or the like represents giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

The terms "a", "the", and "this" of singular forms used in embodiments and the appended claims of this application are also intended to include plural forms, unless otherwise specified in the context clearly. It should also be understood that, the term "and/or" used in this specification indicates and includes any or all possible combinations of one or more associated listed items. As used in this specification, the meaning of "one", "a", and "the" in singular forms is also intended to include plural forms, unless otherwise expressly indicated in the context. It will be further understood that the terms "include", "have", "comprise", and/or "comprising" are used in this specification to specify the existence of the stated features, integers, steps, operations, elements, and/or components, but do not exclude the existence or addition of one or more other features, integers, steps, operations, elements, components, and/or groups thereof.

It should be noted that the terms used in embodiments of this application are merely for the purpose of describing specific embodiments, and are not intended to limit this application.

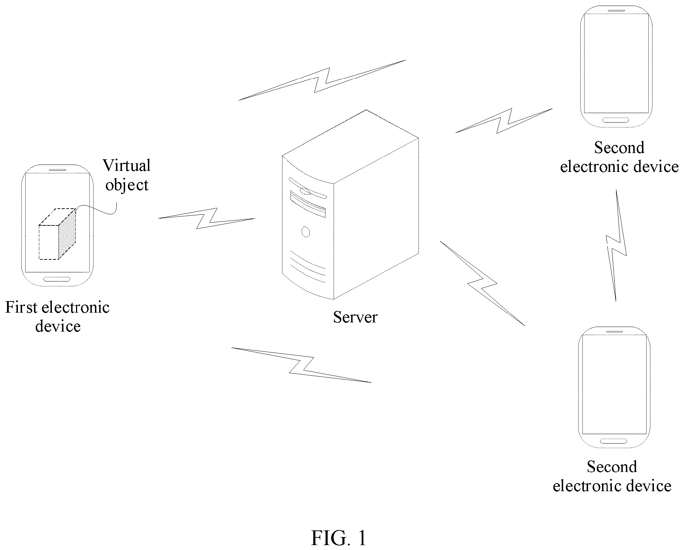

FIG. 1 is a schematic diagram of an application architecture according to an embodiment of this application. As shown in FIG. 1, the application architecture includes a plurality of electronic devices and a server. The plurality of electronic devices may include a first electronic device and one or more second electronic devices (for example, there are two second electronic devices in FIG. 1). The one or more second electronic devices are several electronic devices other than the first electronic device. The plurality of electronic devices may communicate with the server, and the plurality of electronic devices may communicate with each other. For example, any device in the application architecture may communicate with another device in a manner such as wireless-fidelity (wireless-fidelity, Wi-Fi) communication, Bluetooth communication, or cellular 2/3/4/5 generation (2/3/4/5 generation, 2G/3G/4G/5G) communication. It should be understood that another communication manner, including a future communication manner, may be further used between the server and the electronic device. This is not specifically limited herein. It should be noted that the "one or more second electronic devices" in embodiments of this application merely indicates another electronic device other than the first electronic device, but is not intended to limit whether types of a plurality of electronic devices are the same.

The electronic device may be various types of devices configured with a camera and a display component. For example, the electronic device may be a terminal device such as a mobile phone, a tablet computer, a notebook computer, or a video recorder (for example, the electronic device in FIG. 1 is a mobile phone). Alternatively, the electronic device may be a device used for virtual scene interaction, including VR glasses, an AR device, an MR interaction device, or the like. Alternatively, the electronic device may be a wearable electronic device such as a smartwatch or a smart band. Alternatively, the electronic device may be a device mounted on a vehicle like an automobile, a driverless vehicle, an uncrewed aerial vehicle, or an industrial robot. A specific form of the electronic device is not specially limited in embodiments of this application.

In addition, the electronic device may also be referred to as user equipment (user equipment, UE), a subscriber station, a mobile unit, a subscriber unit, a wireless unit, a remote unit, a mobile device, a wireless device, a wireless communication device, a remote device, a mobile subscriber station, a terminal device, an access terminal, a mobile terminal, a wireless terminal, a smart terminal, a remote terminal, a handset, a user agent, a mobile client, a client, or another proper term.

The server may be one or more physical servers (for example, the server is one physical server in FIG. 1), or may be a computer cluster, or may be a virtual machine or a cloud server in a cloud computing scenario, or the like.

In embodiments of this application, a virtual scene application (application, APP) such as a VR application, an AR application, or an MR application may be installed on the electronic device, and the VR application, the AR application, or the MR application may be run based on a user operation (for example, tap, touch, slide, shake, or sound control). The electronic device may capture visual information of any object in an environment by using a sensor, and then display a virtual object on the display component based on the captured visual information. The virtual object may be a virtual object in a VR scenario, an AR scenario, or an MR scenario (that is, an object in a virtual environment).

In embodiments of this application, a navigation, detection, or control application may be installed on the electronic device, and the corresponding application is run based on user control or a preset program. The electronic device may perform application such as path planning, object detection, and vehicle control based on a pose and other status information of the electronic device in a current environment.

The pose is location and orientation information of the electronic device, and may be an absolute pose in a world coordinate system, or may be a relative pose relative to a point in an environment.

The visual information in embodiments of this application includes but is not limited to an image video (without depth information) captured by the camera, an image video with depth information captured by a depth sensor (depth sensor), data captured by a LiDAR (LiDAR), and data captured by a RaDAR (RaDAR).

It should be noted that, in embodiments of this application, the virtual scene application in the electronic device may be an application built in the electronic device, or may be an application that is provided by a third-party service provider and that is installed by a user. This is not specifically limited herein.

In embodiments of this application, the electronic device may be further configured with a simultaneous localization and mapping (simultaneous localization and mapping, SLAM) system. The SLAM system can create a map in a completely unknown environment, and use the map to perform positioning, pose (location and posture) determining, navigation, and the like. In embodiments of this application, a map created by the SLAM system is referred to as a SLAM map. The SLAM map may be understood as a map drawn by the SLAM system based on environment information captured by a capturing device. The capturing device may include a visual information capturing apparatus and an inertia measurement unit (inertial measurement unit, IMU) in the electronic device. The visual information capturing apparatus may include, for example, a camera, a lens, a depth camera, a LiDAR, or a RaDAR. The IMU may include, for example, a gyroscope, an accelerometer, or another sensor.

In embodiments of this application, the SLAM map is also referred to as a 3D map. It should be noted that the 3D map includes but is not limited to a SLAM map, and may further include a three-dimensional map created based on another technology. This is not specifically limited in embodiments of this application.

In a possible implementation, the 3D map may include a plurality of 3D map points, and correspondingly, data of the 3D map may include data of the plurality of 3D map points. A 3D map point is a point that is interesting or has a significant feature in an environment.

A possible manner of obtaining the 3D map point is to shoot data by using a plurality of devices such as a LiDAR, an aerial photography (oblique photography) device from a drone visual angle, a high-definition panoramic camera, and a high-definition industrial camera, and extract, by using ORB, scale-invariant feature transformation (scale-invariant feature transform, SIFT), speeded up robust features (speeded up robust features, SURF), binary robust independent elementary features (binary robust independent elementary features, BRIEF), binary robust invariant scalable keypoints (binary robust invariant scalable keypoints, BRISK), a fast retina keypoint (fast retina keypoint, FREAK), D2Net or a method such as a feature point detection and descriptor extraction method (SuperPoint) based on self-supervised training, the 3D map point from the data shot by the foregoing devices.

Data of the 3D map point may include:

### (1) 3D map point descriptor

The 3D map point descriptor is a vector (vector) that represents a local feature of the corresponding 3D map point. In a vision positioning algorithm, the 3D map point descriptor is used to perform matching between 3D map points. A possible practice is to calculate a distance (which may be a Euclidean distance, an inner product distance, a Hamming distance, or the like) between two 3D map point descriptors. When the distance is less than a threshold, it is considered that the two 3D map points match each other.

### (2) 3D map point spatial location

The 3D map point spatial location may be represented by X, Y, and Z on three-dimensional spatial axes, or may be represented by a longitude, a latitude, and an altitude, or may be represented by polar coordinates, or the like. A method for representing the 3D map point spatial location is not specifically limited in embodiments of this application. The 3D map point spatial location may be an absolute location of the 3D map point, or may be a relative location of the 3D map point. For example, if a central location of an entire region is used as an origin, all 3D map point spatial locations are offset positions relative to a spatial location of the origin.

In embodiments of this application, a number may be allocated to each 3D map point and written into data of the 3D map, or a storage order of a plurality of 3D map points in a memory may be used to implicitly indicate numbers of the 3D map points. It should be noted that an order of the plurality of 3D map points included in the 3D map has no actual meaning. Therefore, the foregoing numbers may be considered as identifiers that identify the 3D map points, to distinguish between the 3D map points. However, the numbers are not used to limit the order of the plurality of 3D map points. For example, the 3D map includes three 3D map points numbered 1, 2, and 3 respectively, and the three 3D map points may be processed in the order of 1, 2, and 3, or in the order of 3, 2, and 1, or in the order of 2, 1, and 3, or the like.

In a possible implementation, the data of the 3D map further includes a plurality of region descriptors, and any one of the plurality of region descriptors is used to describe features of some or all of the plurality of 3D map points. That is, for any one of the plurality of region descriptors, the region descriptor may be used to describe the features of some or all of the plurality of 3D map points. In this way, the region descriptors and 3D map points are in a one-to-many relationship. A feature of each of the plurality of 3D map points may be described by some or all of the plurality of region descriptors. In this way, the 3D map points and the region descriptors are in a one-to-many relationship. It can be learned from the foregoing that, the plurality of region descriptors and the plurality of 3D map points are in a many-to-many relationship. Methods for generating the region descriptors include but are not limited to conventional methods such as BOW and vector of locally aggregated descriptors (vector of locally aggregated descriptors, VLAD) and new methods based on Net VLAD and artificial intelligence (artificial intelligence, AI). Similarly, the plurality of region descriptors may also be identified with numbers, to be distinguished between each other. However, the numbers do not limit an order of the plurality of region descriptors, either.

In a possible implementation, the data of the 3D map further includes a correspondence between the 3D map points and the descriptors, and the correspondence explicitly describes 3D map points to which any descriptor corresponds and descriptors to which any 3D map point corresponds.

Optionally, the foregoing correspondence may be explicitly described with a correspondence table between numbers of region descriptors and numbers of 3D map points. For example, the 3D map includes three region descriptors that are numbered T1 to T3, and six 3D map points. Six 3D map point spatial locations are numbered P₁ to P₆, and six 3D map point descriptors are numbered F₁ to F₆. The correspondence table is shown in Table 1.

**Table 1**

| Region descriptor | 3D map point spatial location | 3D map point descriptor |
|---|---|---|
| T1 | P₁ | F₁ |
| | P₂ | F₂ |
| | P₃ | F₃ |
| T2 | P₂ | F₂ |
| | P₃ | F₃ |
| T3 | P₃ | F₃ |
| | P₄ | F₄ |
| | P₅ | F₅ |
| | P₆ | F₆ |

It should be noted that, Table 1 is an example of the correspondence table between the numbers of the region descriptors and the numbers of the 3D map points. The correspondence table may alternatively be presented in another format or manner. This is not specifically limited in this application.

Optionally, the foregoing correspondence may alternatively be implicitly described with storage positions of the region descriptors and the 3D map points. For example, T1 is first stored in the memory, then data of P₁, P₂, and P₃ is stored, then T2 is stored, then data of P₂ and P₃ is stored, and finally T3 is stored, and then data of P₃, P₄, P₅, and P₆ is stored.

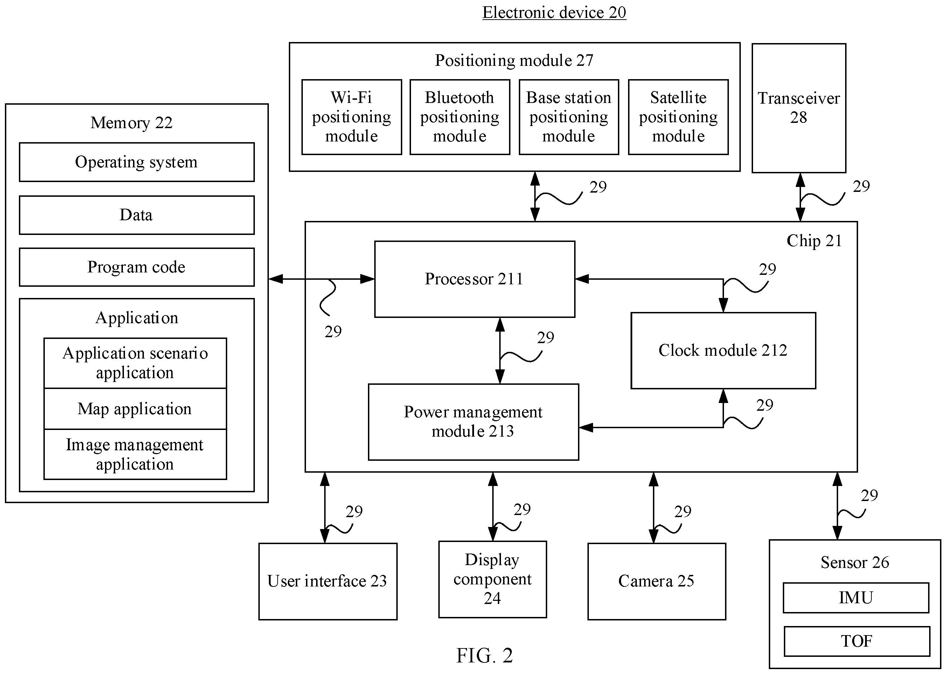

FIG. 2 is a schematic diagram of a structure of an electronic device 20 according to an embodiment of this application. As shown in FIG. 2, the electronic device 20 may be at least one of the first electronic device and the one or more second electronic devices in the embodiment shown in FIG. 1. It should be understood that, the structure shown in FIG. 2 does not constitute a specific limitation on the electronic device 20. In some other embodiments of this application, the electronic device 20 may include more or fewer components than those shown in FIG. 2, or combine some components, or split some components, or have different component arrangements. The components shown in FIG. 2 may be implemented in hardware including one or more signal processors and/or application-specific integrated circuits, software, or a combination of hardware and software.

The electronic device 20 may include a chip 21, a memory 22 (one or more computer-readable storage media), a user interface 23, a display component 24, a camera 25, a sensor 26, a positioning module 27 configured to perform device positioning, and a transceiver 28 configured to perform communication. These components may communicate with each other by using one or more buses 29.

The chip 21 may integrate and include: one or more processors 211, a clock module 212, and a power management module 213. The clock module 212 integrated in the chip 21 is mainly configured to provide a timer used for data transmission and temporal control for the processor 211. The timer may implement clock functions of data transmission and temporal control. The processor 211 may execute operation based on instruction operation code and a temporal signal, generate an operation control signal, and complete control of instruction fetching and instruction execution. The power management module 213 integrated in the chip 21 is mainly configured to provide a stable and high-precision voltage for the chip 21 and another component of the electronic device 20.

The processor 211 may also be referred to as a central processing unit (central processing unit, CPU). The processor 211 may specifically include one or more processing units. For example, the processor 211 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural network processing unit (neural-network processing unit, NPU). Different processing units may be independent components, or may be integrated into one or more processors.

In a possible implementation, the processor 211 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The memory 22 may be connected to the processor 211 through the bus 29, or may be coupled to the processor 211. The memory 22 is configured to store various software programs and/or a plurality of groups of instructions. The memory 22 may include a high-speed random access memory (for example, a cache), or may include a non-volatile memory, for example, one or more magnetic disk storage devices, a flash memory, or another non-volatile solid-state storage device. The memory 22 may store an operating system, for example, an embedded operating system such as Android (Android), iOS (iOS), Windows (Windows), or Linux. The memory 22 may further store data, for example, image data, point cloud data, 3D map data, pose data, coordinate system conversion information, and map update information. The memory 22 may further store computer-executable program code. The computer-executable program code includes instructions, for example, a communication program instruction, and a related program instruction of a SLAM system. The memory 22 may further store one or more applications, for example, a virtual scene application such as AR/VR/MR, a map application, an image management application, and a navigation and control application. The memory 22 may further store a user interface program. The user interface program may vividly display content of an application, for example, a virtual object in a virtual scene such as AR/VR/MR, by using a graphical operation interface, and present the content by using the display component 24, and receive, by using an input control such as a menu, a dialog box, or a key, a control operation performed by a user on the application.

The user interface 23 may be, for example, a touch panel. The touch panel may detect an operation instruction of the user on the touch panel. The user interface 23 may alternatively be, for example, a keypad, a physical button, or a mouse.

The electronic device 20 may include one or more display components 24. The electronic device 20 may implement a display function jointly through the display component 24, the graphics processing unit (GPU) and the application processor (AP) in the chip 21, and the like. The GPU is a microprocessor for implementing image processing, and is connected to the display component 24 and the application processor. The GPU performs mathematical and geometric calculation for graphics rendering. The display component 24 may display interface content output by the electronic device 20, for example, display an image, a video, and the like in a virtual scene such as AR/VR/MR. The interface content may include an interface of a running application, a system-level menu, and the like, and may specifically include the following interface elements: an input interface element, such as a button (Button), text (Text), a scroll bar (Scroll Bar), a menu (Menu), and the like; and an output interface element, such as a window (Window), a label (Label), an image, a video, an animation, and the like.

The display component 24 may be a display panel, a lens (for example, VR glasses), a projection screen, or the like. The display panel may also be referred to as a display screen, for example, may be a touchscreen, a flexible screen, a curved screen, or the like, or may be another optical component. It should be understood that the display screen of the electronic device in embodiments of this application may be a touchscreen, a flexible screen, a curved screen, or a screen in another form. In other words, the display screen of the electronic device has a function of displaying an image, and a specific material and shape of the display screen are not specifically limited.

For example, when the display component 24 includes a display panel, the display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flex light-emitting diode (flex light-emitting diode, FLED), a Miniled, a MicroLed, a Micro-oLed, a quantum dot light-emitting diode (quantum dot light-emitting diodes, QLED), or the like. In addition, in a possible implementation, the touch panel in the user interface 23 may be coupled to the display panel in the display component 24. For example, the touch panel may be disposed below the display panel, the touch panel is configured to detect touch pressure that acts on the display panel when the user enters a touch operation (for example, tap, slide, or touch) by using the display panel, and the display panel is configured to display content.

The camera 25 may be a monocular camera, a binocular camera, or a depth camera, and is configured to shoot/record an environment to obtain images/video images. An image/video image captured by the camera 25 may be, for example, used as input data of the SLAM system, or the image/video may be displayed through the display component 24.

In a possible implementation, the camera 25 may also be considered as a sensor. An image captured by the camera 25 may be in an IMG format, or may be in another format type. This is not specifically limited in embodiments of this application.

The sensor 26 may be configured to capture data related to a status change (for example, rotation, swing, movement, or jitter) of the electronic device 20. The data captured by the sensor 26 may be used as input data of the SLAM system. The sensor 26 may include one or more sensors, such as an inertia measurement unit (inertial measurement unit, IMU) and a time of flight (time of flight, TOF) sensor. The IMU may include sensors such as a gyroscope and an accelerometer. The gyroscope is configured to measure an angular velocity of the electronic device during movement of the electronic device, and the accelerometer is configured to measure an acceleration of the electronic device during movement of the electronic device. The TOF sensor may include an optical transmitter and an optical receiver. The optical transmitter is configured to emit light outwards, for example, laser, an infrared ray, or a radar wave. The optical receiver is configured to detect reflected light, for example, reflected laser, a reflected infrared ray, or a reflected radar wave.

It should be noted that the sensor 26 may further include more other sensors, such as an inertia sensor, a barometer, a magnetometer, and a wheel speedometer. This is not specifically limited in embodiments of this application.

The positioning module 27 is configured to implement physical positioning of the electronic device 20, for example, configured to obtain an initial location of the electronic device 20. The positioning module 27 may include one or more of a Wi-Fi positioning module, a Bluetooth positioning module, a base station positioning module, and a satellite positioning module. A global navigation satellite system (global navigation satellite system, GNSS) may be disposed in the satellite positioning module to assist positioning. The GNSS is not limited to a BeiDou system, a global positioning system (global positioning system, GPS), a global navigation satellite system (global navigation satellite system, GLONASS), and a Galileo (Galileo) navigation satellite system.

The transceiver 28 is configured to implement communication between the electronic device 20 and another device (for example, a server or another electronic device). The transceiver 28 integrates a transmitter and a receiver, which are respectively configured to send and receive a radio frequency signal. In a specific implementation, the transceiver 28 includes but is not limited to: an antenna system, a radio frequency (radio frequency, RF) transceiver, one or more amplifiers, a tuner, one or more oscillators, a digital signal processor, a codec (CODEC) chip, a subscriber identity module (subscriber identity module, SIM) card, a storage medium, and the like. In a possible implementation, the transceiver 28 may alternatively be implemented on a separate chip. The transceiver 28 supports at least one type of data network communication in 2G/3G/4G/5G and the like, and/or supports at least one of the following short-distance wireless communication manners: Bluetooth (Bluetooth, BT) communication, wireless fidelity (wireless fidelity, Wi-Fi) communication, near field communication (near field communication, NFC), infrared (infrared, IR) wireless communication, ultra wide band (ultra wide band, UWB) communication, and ZigBee (ZigBee) protocol communication.

In embodiments of this application, the processor 211 runs program code stored in the memory 22, to perform various function applications and data processing of the electronic device 20.

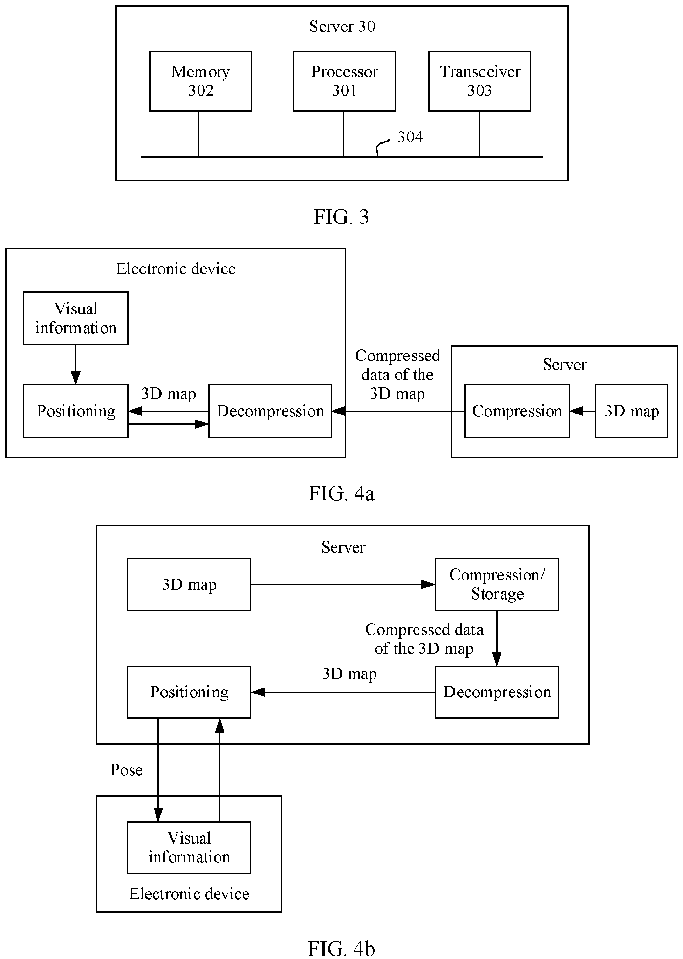

FIG. 3 is a schematic diagram of a structure of a server 30 according to an embodiment of this application. As shown in FIG. 3, the server 30 may be the server in the embodiment shown in FIG. 1. The server 30 includes a processor 301, a memory 302 (one or more computer-readable storage media), and a transceiver 303. These components may communicate with each other through one or more buses 304.

The processor 301 may be one or more CPUs. When the processor 301 is one CPU, the CPU may be a single-core CPU, or a multi-core CPU.

The memory 302 may be connected to the processor 301 through the bus 304, or may be coupled to the processor 301, and is configured to store various program code and/or a plurality of groups of instructions and data (for example, map data and pose data). In a specific implementation, the memory 302 includes but is not limited to a random access memory (Random Access Memory, RAM), a read-only memory (Read-Only Memory, ROM), an erasable programmable read-only memory (Erasable Programmable Read-Only Memory, EPROM), or a compact disc read-only memory (Compact Disc Read-Only Memory, CD-ROM).

The transceiver 303 mainly integrates a receiver and a transmitter. The receiver is configured to receive data (for example, a request or an image) sent by the electronic device, and the transmitter is configured to send data (for example, map data or pose data) to the electronic device.

It should be understood that the server 30 shown in FIG. 3 is merely an example provided in embodiments of this application, and the server 30 may further have more components than those shown in the figure. This is not specifically limited in embodiments of this application.

In embodiments of this application, the processor 301 runs program code stored in the memory 302, to perform various function applications and data processing of the server 30.

The term "coupling" used in embodiments of this application means a direct connection or a connection through one or more intermediate components or circuits.

FIG. 4a is a schematic diagram of an application scenario according to an embodiment of this application. As shown in FIG. 4a, in the application scenario, an electronic device captures visual information by using a sensor, and determines a current pose of the electronic device based on the visual information and a 3D map from a server.

The 3D map is provided by the server. To be specific, the server creates the 3D map, and then performs compression processing on the 3D map, to transmit compressed data of the 3D map to the electronic device. After receiving the compressed data of the 3D map, the electronic device performs decompression processing to obtain reconstructed data of the 3D map, and determines the current pose of the electronic device based on the captured visual information and the reconstructed data of the 3D map. The pose is location information of the electronic device, and may be an absolute pose in a world coordinate system, or may be a relative pose relative to a point in an environment.

In embodiments of this application, the server may create a 3D map in advance, and performs compression processing on the 3D map and then store the compressed 3D map locally. In this way, storage space can be reduced. In addition, the server may alternatively transmit the compressed data of the 3D map to another device, for example, a cloud storage device.
1. The server creates the 3D map, compresses the 3D map to obtain the compressed data of the 3D map, and stores the compressed data locally.
   The server performs compression processing on the 3D map to reduce local storage space.
2. The electronic device sends a map download request to the server. The map download request is triggered in two manners:
   (1) A user starts a map application installed on the electronic device, and the application uploads, to the server corresponding to the application, location information obtained based on GPS positioning or Wi-Fi positioning. The upload operation may trigger the map download request. Because the uploaded content includes the location information, the server may perform preliminary estimation based on the location information, and transmit, to the electronic device, compressed data of a 3D map of a region to which a positioning point indicated by the location information belongs. The range of the region to which the positioning point indicated by the location information belongs may be preset. For example, the region to which the positioning point belongs may be an administrative region of each level (including a county, a city, a country, or an administrative region) in which the positioning point is located, or may be a circular region with the positioning point as a center and a specified distance as a radius.
   (2) The user starts the map application installed on the electronic device, and actively enters or selects a region on the application. For example, the user actively enters "xx business center", or selects "Street A" from a list "Street A, Street B, and Street C". The foregoing operations of the user may trigger the map download request. Regardless of whether the user enters or selects a geographical location, the server transmits the compressed data of the 3D map of the geographical location to the electronic device.
      It should be understood that, in embodiments of this application, in addition to the foregoing two manners, the map download request may be triggered in another manner. For example, the electronic device automatically detects whether a condition for downloading a 3D map or starting to download a 3D map is met, or the electronic device starts to download a 3D map by detecting an ambient light change or an environment change, to request the server to download a 3D map within a region range. A size of the region range is not specifically limited.
3. The server sends the compressed data of the 3D map to the electronic device.
4. The electronic device captures the visual information by using the sensor.
   It should be noted that step 3 and step 4 are independent of each other, and an order is not limited.
5. The electronic device decompresses the compressed data of the 3D map to obtain the reconstructed data of the 3D map.
6. The electronic device performs positioning on the 3D map based on the visual information, to obtain the pose corresponding to the visual information.

After receiving the compressed data of the 3D map, the electronic device does not need to immediately decompress the compressed data, and only needs to decompress the compressed data to obtain the reconstructed data of the 3D map before performing positioning based on the visual information. For example, the user may pre-download compressed data of a 3D map within a region range by downloading an "offline map", and decompress the compressed data of the 3D map only when positioning needs to be performed.

FIG. 4b is a schematic diagram of an application scenario according to an embodiment of this application. As shown in FIG. 4b, in the application scenario, an electronic device captures visual information by using a sensor, and a server determines a current pose of the electronic device based on the visual information from the electronic device and a 3D map.

The 3D map is provided by the server. To be specific, the server creates the 3D map, performs compression processing on the 3D map, and stores compressed data of the 3D map locally. When receiving the visual information from the electronic device, the server performs decompression processing to obtain reconstructed data of the 3D map, and determines the current pose of the electronic device based on the visual information and the reconstructed data of the 3D map.
1. The server creates the 3D map, compresses the 3D map to obtain the compressed data of the 3D map, and stores the compressed data locally.
2. The electronic device captures the visual information by using the sensor.
3. The electronic device sends the visual information to the server.
4. The server decompresses the compressed data of the 3D map to obtain the reconstructed data of the 3D map.
   It should be understood that the server performs compression processing on the 3D map to reduce storage space.
5. The server performs positioning on the 3D map based on the visual information, to obtain the pose corresponding to the visual information.
6. The server sends the pose to the electronic device.

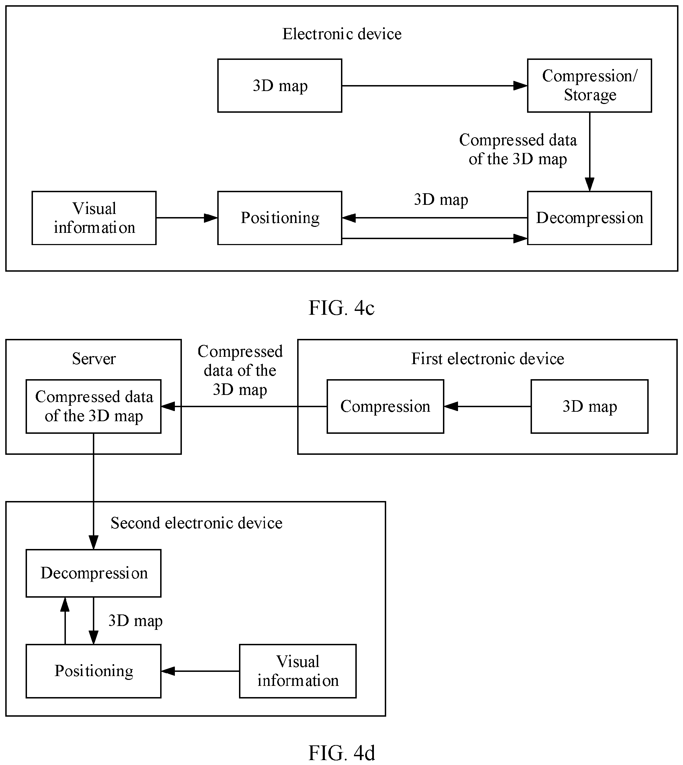

FIG. 4c is a schematic diagram of an application scenario according to an embodiment of this application. As shown in FIG. 4c, in the application scenario, an electronic device captures visual information by using a sensor, and determines a current pose of the electronic device based on the captured visual information and a 3D map.

The 3D map is provided by the electronic device. To be specific, the electronic device creates the 3D map, performs compression processing on the 3D map, and stores compressed data of the 3D map locally. When the visual information is captured, the electronic device performs decompression processing to obtain reconstructed data of the 3D map, and determines the current pose of the electronic device based on the captured visual information and the reconstructed data of the 3D map.
1. The electronic device creates the 3D map, compresses the 3D map to obtain the compressed data of the 3D map, and stores the compressed data locally.
   It should be understood that the electronic device performs compression processing on the 3D map to reduce storage space.
2. The electronic device captures the visual information by using the sensor.
3. The electronic device decompresses the compressed data of the 3D map to obtain the reconstructed data of the 3D map.
4. The electronic device performs positioning on the 3D map based on the visual information, to obtain the pose corresponding to the visual information.

FIG. 4d is a schematic diagram of an application scenario according to an embodiment of this application. As shown in FIG. 4b, in the application scenario, a second electronic device captures visual information by using a sensor, and determines a current pose of the second electronic device based on the visual information and a 3D map from a server.

The 3D map is created by a first electronic device. To be specific, the first electronic device creates the 3D map, performs compression processing on the 3D map, and then sends compressed data of the 3D map to the server. The server then sends the compressed data of the 3D map to the second electronic device, and the second electronic device performs decompression processing to obtain reconstructed data of the 3D map, and determines the current pose of the second electronic device based on the captured visual information and the reconstructed data of the 3D map.

In embodiments of this application, the first electronic device may create the 3D map in advance, perform compression processing on the 3D map, and transmit the compressed 3D map to the server. In this way, transmission bandwidth can be reduced.
1. The first electronic device creates the 3D map, and performs compression to obtain the compressed data of the 3D map.
2. The first electronic device sends the compressed data of the 3D map to the server.
   The first electronic device performs compression processing on the 3D map and then transmits the compressed 3D map, so that transmission bandwidth can be reduced, and transmission efficiency can be improved.
3. The second electronic device sends a map download request to the server.
   The second electronic device may also send the map download request based on the trigger manner shown in FIG. 4a.
4. The server sends the compressed data of the 3D map to the second electronic device.
5. The second electronic device decompresses the compressed data of the 3D map to obtain the reconstructed data of the 3D map.
6. The second electronic device captures the visual information by using the sensor.
7. The second electronic device performs positioning on the 3D map based on the visual information, to obtain the pose corresponding to the visual information.

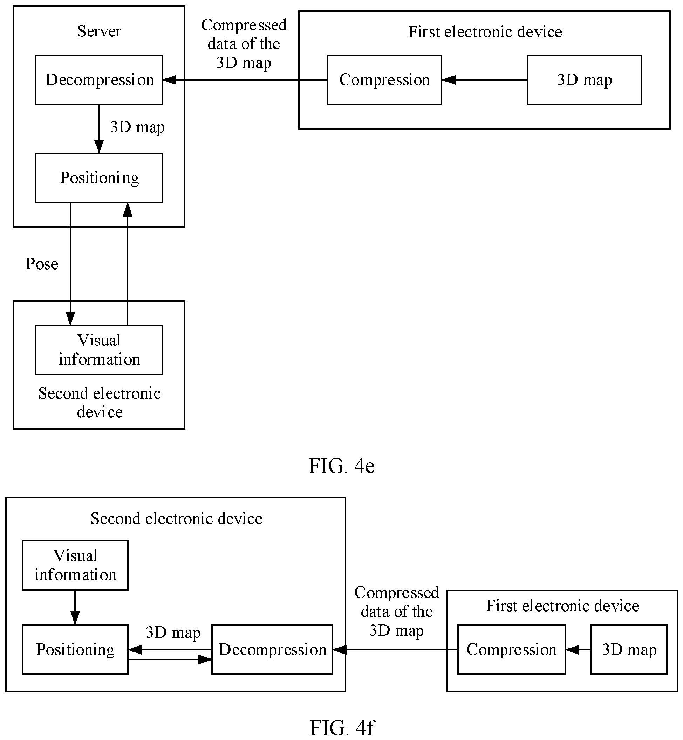

FIG. 4e is a schematic diagram of an application scenario according to an embodiment of this application. As shown in FIG. 4c, in the application scenario, a second electronic device captures visual information by using a sensor, and a server determines a current pose of the second electronic device based on the visual information from the second electronic device and a 3D map from a first electronic device.

The 3D map is created by the first electronic device. To be specific, the first electronic device creates the 3D map, performs compression processing on the 3D map, and then sends compressed data of the 3D map to the server. The server performs decompression processing to obtain reconstructed data of the 3D map, and determines the current pose of the second electronic device based on the visual information from the second electronic device and the reconstructed data of the 3D map.
1. The first electronic device creates the 3D map, and performs compression to obtain the compressed data of the 3D map.
2. The first electronic device sends the compressed data of the 3D map to the server.
3. The second electronic device captures the visual information by using the sensor.
4. The second electronic device sends a positioning request to the server, where the positioning request carries the visual information.
5. The server decompresses the compressed data of the 3D map to obtain the reconstructed data of the 3D map.
6. The server performs positioning on the 3D map based on the visual information, to obtain the pose corresponding to the visual information.
7. The server sends, to the second electronic device, the pose obtained through positioning.

FIG. 4f is a schematic diagram of an application scenario according to an embodiment of this application. As shown in FIG. 4d, in the application scenario, a second electronic device captures visual information by using a sensor, and determines a current pose of the second electronic device based on the visual information and a 3D map from a first electronic device.

The 3D map is created by the first electronic device. To be specific, the first electronic device creates the 3D map, performs compression processing on the 3D map, and then sends compressed data of the 3D map to the second electronic device. The second electronic device performs decompression processing to obtain reconstructed data of the 3D map, and determines the current pose of the second electronic device based on the captured visual information and the 3D map from the first electronic device.
1. The first electronic device creates the 3D map, compresses the 3D map to obtain the compressed data of the 3D map, and stores the compressed data locally.
2. The second electronic device sends a map download request to the first electronic device.
3. The first electronic device sends the compressed data of the 3D map to the second electronic device.
4. The second electronic device decompresses the compressed data of the 3D map to obtain the reconstructed data of the 3D map.
5. The second electronic device captures the visual information by using the sensor.
6. The second electronic device performs positioning on the 3D map based on the visual information, to obtain the pose corresponding to the visual information.

Positioning algorithms used in the embodiments shown in FIG. 4a to FIG. 4f may include the following process:
(1) A to-be-searched region descriptor is extracted from the visual information, where an algorithm used for extracting the to-be-searched region descriptor is consistent with an algorithm used for extracting a region descriptor from the 3D map.
(2) A to-be-searched 3D map point is extracted from the visual information, and a to-be-searched 3D map point spatial location and a to-be-searched 3D map point descriptor are obtained, where an algorithm for extracting the to-be-searched 3D map point descriptor is consistent with an algorithm for extracting a 3D map point descriptor from the 3D map.
(3) Searching is performed in a plurality of region descriptors included in the data of the 3D map based on the to-be-searched region descriptor, to obtain a plurality of candidate region descriptors.
   In embodiments of this application, a distance between the to-be-searched region descriptor and each of the plurality of region descriptors may be calculated. The distance may include a Hamming distance, a Manhattan distance, a Euclidean distance, or the like. Then, at least one region descriptor that meets a condition (for example, the distance is less than a threshold) is selected as a candidate region descriptor.
(4) The to-be-searched 3D map point descriptor is separately matched with 3D map point descriptors corresponding to the plurality of candidate region descriptors, and matching is to calculate a similarity between the to-be-searched 3D map point descriptor and each of the 3D map point descriptors corresponding to the plurality of candidate region descriptors, to find a most similar 3D map point.
(5) The pose of the electronic device is obtained through calculation based on the matched 3D map point with a pose solution algorithm such as PnP and EPnP in ORB-SLAM2.

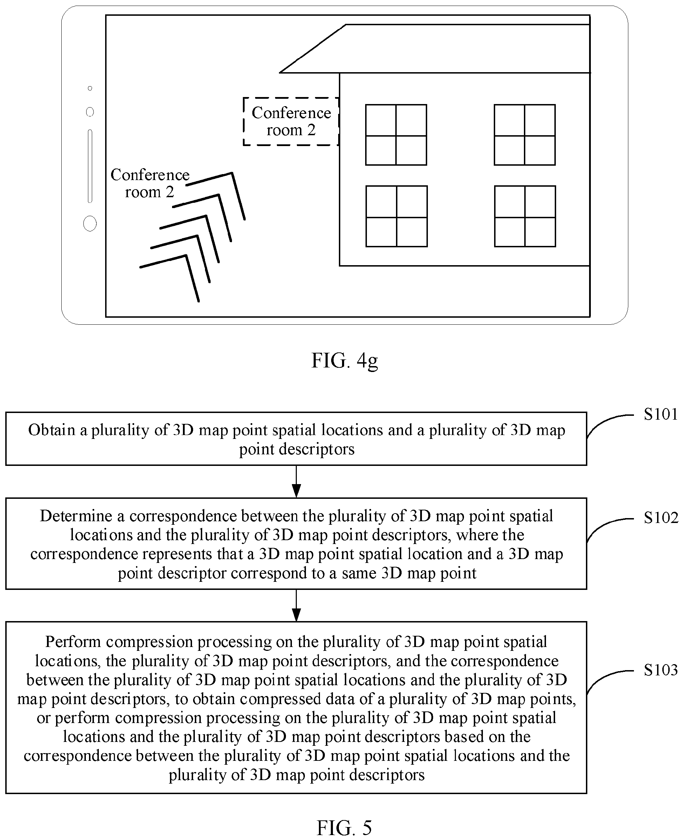

In any application scenario in FIG. 4a to FIG. 4f, positioning is performed based on the 3D map in embodiments of this application, to obtain the current pose of the electronic device. The pose may be applied to fields such as AR navigation, AR human-computer interaction, driving assistance, and self-driving. For example, AR navigation is performed based on the pose. FIG. 4g is a schematic diagram of a user interface displayed by an electronic device according to an embodiment of this application. The electronic device may display, based on the pose, a user interface shown in FIG. 4g. The user interface may include a navigation arrow indication for navigation to a conference room 2, and the navigation arrow indication for navigation to the conference room 2 may be a virtual object obtained from a server or obtained locally based on the pose. The user interface may further include visual information captured by a sensor, for example, a building shown in FIG. 4g. A user goes to the conference room 2 with reference to the user interface shown in FIG. 4g of the electronic device.

It should be noted that the reconstructed data that is of the 3D map and that is obtained through decompression in embodiments of this application may also be referred to as recreated data of the 3D map.

The embodiments shown in FIG. 4a to FIG. 4f all relate to performing compression processing and decompression processing on the 3D map. Embodiments of this application provide a plurality of methods for performing the foregoing compression processing and decompression processing. The following describes the methods for performing compression processing and decompression processing.

Based on the foregoing descriptions, the following provides some methods for compressing a 3D map provided in embodiments of this application. For convenience, the method embodiments described below are all expressed as a combination of a series of action steps. However, a person skilled in the art should understand that specific implementations of the technical solutions of this application are not limited to an order of the described series of action steps.

FIG. 5 is a schematic flowchart of a method for compressing a 3D map according to an embodiment of this application. In some implementations, the method may be applied to an electronic device, or may be applied to a server. An execution body for performing the method for compressing a 3D map in this embodiment of this application may also be referred to as a compressor or an encoder. The method includes but is not limited to the following steps.

S101: Obtain a plurality of 3D map point spatial locations and a plurality of 3D map point descriptors.

Any one of the plurality of 3D map point spatial locations corresponds to one 3D map point in the 3D map. That is, the 3D map point spatial locations and 3D map points may be in a one-to-one relationship. Any one of the plurality of 3D map point descriptors corresponds to one 3D map point in the 3D map. That is, the 3D map point descriptors and 3D map points may be in a one-to-one relationship.

The plurality of 3D map point spatial locations and the plurality of 3D map point descriptors obtained herein are data that needs to be compressed in subsequent S102 and S103. The plurality of 3D map point spatial locations and the plurality of 3D map point descriptors may be 3D map point spatial locations and 3D map point descriptors that correspond to 3D map points in one or more regions in the 3D map. The one or more regions herein may be properly set based on a compression requirement. For example, the one or more regions may be a region corresponding to a map download request sent by the electronic device, for example, a region in which "xx business center" is located.

S102: Determine a correspondence between the plurality of 3D map point spatial locations and the plurality of 3D map point descriptors, where the correspondence represents that a 3D map point spatial location and a 3D map point descriptor correspond to a same 3D map point.

The correspondence between the plurality of 3D map point spatial locations and the plurality of 3D map point descriptors may be that any one of the plurality of 3D map point spatial locations corresponds to one of the plurality of 3D map point descriptors, that is, one 3D map point spatial location and one 3D map point descriptor correspond to a same 3D map point.

For example, the 3D map includes five map points, which are numbered 1, 2, 3, 4, and 5 respectively. The plurality of 3D map point spatial locations include five 3D map point spatial locations, which are P₁ to P₅ respectively, and the plurality of 3D map point descriptors include five 3D map point descriptors, which are F₁ to F₅ respectively. In this case, the correspondence may include {P₁, F₁}, {P₂, F₂}, {P₃, F₃}, {P₄, F₄}, and {P₅, F₅}. {Pᵢ, Fᵢ} represents Pᵢ and Fᵢ that correspond to a same 3D map point, that is, Pᵢ corresponds to Fᵢ. i ∈ [1, n], n is a quantity of 3D map points, and in the example herein, n=5.

Step 103: Perform compression processing on the plurality of 3D map point spatial locations, the plurality of 3D map point descriptors, and the correspondence between the plurality of 3D map point spatial locations and the plurality of 3D map point descriptors, to obtain compressed data of a plurality of 3D map points, or perform compression processing on the plurality of 3D map point spatial locations and the plurality of 3D map point descriptors based on the correspondence between the plurality of 3D map point spatial locations and the plurality of 3D map point descriptors, to obtain the compressed data of the plurality of 3D map points.

Compression processing in this embodiment includes but is not limited to processing such as prediction.

The compressed data of the plurality of 3D map points is obtained through compression processing, so that the correspondence can be restored when the compressed data of the plurality of 3D map points is decompressed, thereby obtaining reconstructed data of the 3D map based on the plurality of 3D map point spatial locations, the plurality of 3D map point descriptors, and the correspondence that are obtained through decompression. In this way, compression and decompression of the 3D map can be implemented, so as to reduce storage resource overheads of the 3D map or reduce transmission resource overheads of the 3D map.

In an implementable, the correspondence has an explicit compression manner. To be specific, compression processing is performed on the plurality of 3D map point spatial locations, the plurality of 3D map point descriptors, and the correspondence between the plurality of 3D map point spatial locations and the plurality of 3D map point descriptors, to obtain the compressed data of the plurality of 3D map points. For example, compression processing may be separately performed on correspondence indication information, the 3D map point spatial locations, and the 3D map point descriptors, to obtain the compressed data of the 3D map points. To be specific, the compressed data of the 3D map points includes compressed correspondence indication information. The correspondence indication information indicates a correspondence between a 3D map point spatial location and a 3D map point descriptor. Based on the correspondence indication information, in the plurality of 3D map point spatial locations and the plurality of 3D map point descriptors that are obtained through decompression, a correspondence may be established between that a 3D map point spatial location and a 3D map point descriptor correspond to a same 3D map point, so as to obtain reconstructed data of the 3D map. The foregoing five map points are used as an example for description. The plurality of 3D map point spatial locations obtained through decompression are P₄, P₂, P₅, P₃, and P₁. The plurality of 3D map point descriptors obtained through decompression are F₂, F₁, F₃, F₅, and F₄. A correspondence may be established, based on the correspondence indication information, between that a 3D map point spatial location and a 3D map point descriptor correspond to a same 3D map point. That is, {P₁, F₁}, {P₂, F₂}, {P₃, F₃}, {P₄, F₄}, and {P₅, F₅} are obtained.

For example, the correspondence indication information may be determined based on the correspondence, a plurality of re-sorted 3D map point spatial locations, and the plurality of 3D map point descriptors. Alternatively, the correspondence indication information may be determined based on the correspondence, a plurality of re-sorted 3D map point spatial locations, and a plurality of re-sorted 3D map point descriptors. Alternatively, the correspondence indication information may be determined based on the correspondence, the plurality of 3D map point spatial locations, and the plurality of 3D map point descriptors. Alternatively, the correspondence indication information may be determined based on the correspondence, the plurality of 3D map point spatial locations, and a plurality of re-sorted 3D map point descriptors.

The plurality of re-sorted 3D map point spatial locations herein may be obtained through re-sorting of the plurality of 3D map point spatial locations obtained in S101. The plurality of re-sorted 3D map point descriptors herein may be obtained through re-sorting of the plurality of 3D map point descriptors obtained in S101. Re-sorting of the 3D map point spatial locations and re-sorting of the 3D map point descriptors may be independent re-sorting, or may be nonindependent re-sorting. This is not specifically limited in this embodiment of this application.

In another implementable, the correspondence has an implicit compression manner. To be specific, compression processing is performed on the plurality of 3D map point spatial locations and the plurality of 3D map point descriptors based on the correspondence between the plurality of 3D map point spatial locations and the plurality of 3D map point descriptors, to obtain the compressed data of the plurality of 3D map points. The compressed data of the 3D map points includes compressed 3D map point spatial locations and compressed 3D map point descriptors, but does not include the foregoing compressed correspondence indication information. In the plurality of 3D map point spatial locations or the plurality of 3D map point descriptors obtained through decompression, a correspondence is established between that a 3D map point spatial location and a 3D map point descriptor correspond to a same 3D map point, to obtain the reconstructed data of the 3D map.

Specifically, the plurality of 3D map point descriptors may be re-sorted based on the correspondence between the plurality of 3D map point spatial locations and the plurality of 3D map point descriptors, to obtain a plurality of re-sorted 3D map point descriptors. Compression processing is performed on the plurality of 3D map point spatial locations and the plurality of re-sorted 3D map point descriptors. Alternatively, the plurality of 3D map point spatial locations are re-sorted based on the correspondence between the plurality of 3D map point spatial locations and the plurality of 3D map point descriptors, to obtain a plurality of re-sorted 3D map point spatial locations. Compression processing is performed on the plurality of 3D map point descriptors and the plurality of re-sorted 3D map point spatial locations. Using a Morton code order of the 3D map point spatial locations as an example, five 3D map point descriptors are re-sorted based on the correspondence, that is, {P1, F1}, {P2, F2}, {P3, F3}, {P4, F4} and {P5, F5}, and the Morton code order of the 3D map point spatial locations. For example, five re-sorted 3D map point descriptors are F₂, F₁, F₃, F₅, and F₄. Compression processing is separately performed on the five 3D map point spatial locations and the five re-sorted 3D map point descriptors, to obtain compressed data. Then, during decompression, the plurality of 3D map point spatial locations obtained through decompression are P₄, P₂, P₅, P₃, and P₁, and the plurality of 3D map point descriptors obtained through decompression are F₂, F₁, F₃, F₅, and F₄. A correspondence may be established, based on the Morton code order (P₂, P₁, P₃, P₅, P₄) of the 3D map point spatial locations, between that a 3D map point spatial location and a 3D map point descriptor correspond to a same 3D map point. That is, {P₁, F₁}, {P₂, F₂}, {P₃, F₃}, {P₄, F₄}, and {P₅, F₅} are obtained.

Optionally, in some embodiments, the compressed data of the plurality of 3D map points that is obtained in S103 may be further encapsulated, to obtain a bitstream of the 3D map. The bitstream of the 3D map may be used for transmission, to reduce transmission resources used for transmitting the 3D map. Encapsulation herein may include but is not limited to processing such as entropy coding.

In this embodiment, the compressed data of the plurality of 3D map points is obtained through compression processing. In this way, a data amount of the 3D map can be reduced. In the explicit or implicit compression manner of the correspondence, when the compressed data is decompressed, the correspondence can be restored, to obtain the reconstructed data of the 3D map. When the data amount of the 3D map is reduced, storage space used for storing the 3D map or transmission resources used for transmitting the 3D map can be correspondingly reduced.

For the correspondence indication information, this embodiment of this application provides the following four different manners.

Manner 1: The correspondence indication information may include first correspondence indication information of at least one 3D map point. The first correspondence indication information indicates a location of a 3D map point descriptor in the plurality of 3D map point descriptors or the plurality of re-sorted 3D map point descriptors, where the 3D map point descriptor corresponds to at least one of the plurality of 3D map point spatial locations or the plurality of re-sorted 3D map point spatial locations.

A location in this embodiment of this application is usually a location order in a sequence. For example, the foregoing location in the plurality of 3D map point descriptors or the plurality of re-sorted 3D map point descriptors is a location order that is of the 3D map point descriptor corresponding to the at least one 3D map point spatial location and that is in the plurality of 3D map point descriptors or the plurality of re-sorted 3D map point descriptors. The plurality of 3D map point descriptors or the plurality of re-sorted 3D map point descriptors may be understood as a sequence, and different 3D map point descriptors in the sequence have an order.

{1, 2, ..., j} represents the plurality of 3D map point spatial locations or the plurality of re-sorted 3D map point spatial locations, j E [1, n], and j represents a location order of a corresponding 3D map point spatial location. {1, 2, ..., k} represents the plurality of 3D map point descriptors or the plurality of re-sorted 3D map point descriptors, k ∈ [1, n], and k represents a location order of a corresponding 3D map point descriptor. The first correspondence indication information may include information indicating {*j* → *k*}*,* where {*j* → *k*} represents that a j^{th} location in the plurality of 3D map point spatial locations or the plurality of re-sorted 3D map point spatial locations corresponds to a k^{th} location in the plurality of 3D map point descriptors or the plurality of re-sorted 3D map point descriptors.

For example, the plurality of re-sorted 3D map point spatial locations are P₄, P₂, P₅, P₃, and P₁, where j=1 represents a location order of P₄, j=2 represents a location order of P₂, j=3 represents a location order of P₅, j=4 represents a location order of P₃, and j=5 represents a location order of P₁. For example, the five re-sorted 3D map point descriptors are F₂, F₁, F₃, F₅, and F₄, where k=1 represents a location order of F₂, k=2 represents a location order of F₁, k=3 represents a location order of F₃, k=4 represents a location order of F₅, and k=5 represents a location order of F₄. The first correspondence indication information may be k=5, k=1, k=4, k=3, and k=2. To be specific, the first correspondence indication information is a k sequence. To be specific, j=1 corresponds to k=5. In other words, P₄ corresponds to F₄. j=2 corresponds to k=1. In other words, P₂ corresponds to F₂. j=3 corresponds to k=4. In other words, P₅ corresponds to F₅. j=4 corresponds to k=3. In other words, P₃ corresponds to F₃. j=5 corresponds to k=2. In other words, P₁ corresponds to F₁.

To be specific, the first correspondence indication information indicates k corresponding to j, so that a correspondence between a 3D map point spatial location and a 3D map point descriptor can be determined based on the first correspondence indication information during decompression.

Manner 2: The correspondence indication information may include second correspondence indication information of at least one 3D map point. The second correspondence indication information indicates a location of a 3D map point spatial location in the plurality of 3D map point spatial locations or the plurality of re-sorted 3D map point spatial locations, where the 3D map point spatial location corresponds to at least one of the plurality of 3D map point descriptors or the plurality of re-sorted 3D map point descriptors.

Based on a principle the same as that of the foregoing Implementation 1, the foregoing location in the plurality of 3D map point spatial locations or the plurality of re-sorted 3D map point spatial locations is a location order that is of the 3D map point spatial location corresponding to the at least one 3D map point descriptor and that is in the plurality of 3D map point spatial locations or the plurality of re-sorted 3D map point spatial locations. The plurality of 3D map point spatial locations or the plurality of re-sorted 3D map point spatial locations may be understood as a sequence, and different 3D map point spatial locations in the sequence have an order.

Similarly, {1, 2, ..., j} represents the plurality of 3D map point spatial locations or the plurality of re-sorted 3D map point spatial locations, j E [1, n], and j represents a location order of a corresponding 3D map point spatial location. {1, 2, ..., k} represents the plurality of 3D map point descriptors or the plurality of re-sorted 3D map point descriptors, k ∈ [1,n], and k represents a location order of a corresponding 3D map point descriptor. The second correspondence indication information may include information indicating {*k* → *j*}, where {*k* → *j*} represents that a k^{th} location in the plurality of 3D map point descriptors or the plurality of re-sorted 3D map point descriptors corresponds to a j^{th} location in the plurality of 3D map point spatial locations or the plurality of re-sorted 3D map point spatial locations.

For example, the plurality of re-sorted 3D map point spatial locations are P₄, P₂, P₅, P₃, and P₁, where j=1 represents a location order of P₄, j=2 represents a location order of P₂, j=3 represents a location order of P₅, j=4 represents a location order of P₃, and j=5 represents a location order of P₁. For example, the five re-sorted 3D map point descriptors are F₂, F₁, F₃, F₅, and F₄, where k=1 represents a location order of F₂, k=2 represents a location order of F₁, k=3 represents a location order of F₃, k=4 represents a location order of F₅, and k=5 represents a location order of F₄. The second correspondence indication information may be j=2, j=5, j=4, j=3, and j=1. To be specific, the second correspondence indication information is a j sequence. To be specific, k=1 corresponds to j=2. In other words, F₂ corresponds to P₂. k=2 corresponds to j=5. In other words, F₁ corresponds to P₁. k=3 corresponds to j=4. In other words, F₃ corresponds to P₃. k=4 corresponds to j=3. In other words, F₅ corresponds to P₅. k=5 corresponds to j=1. In other words, F₄ corresponds to P₄.

To be specific, the second correspondence indication information indicates j corresponding to k, so that a correspondence between a 3D map point spatial location and a 3D map point descriptor can be determined based on the second correspondence indication information during decompression.

Manner 3: The correspondence indication information may include first correspondence indication information of at least one 3D map point and second correspondence indication information of at least one 3D map point. The first correspondence indication information indicates a location of a 3D map point descriptor in the plurality of 3D map point descriptors or the plurality of re-sorted 3D map point descriptors, where the 3D map point descriptor corresponds to at least one of the plurality of 3D map point spatial locations or the plurality of re-sorted 3D map point spatial locations. The second correspondence indication information indicates a location of a 3D map point spatial location in the plurality of 3D map point spatial locations or the plurality of re-sorted 3D map point spatial locations, where the 3D map point spatial location corresponds to at least one of the plurality of 3D map point descriptors or the plurality of re-sorted 3D map point descriptors.

In this implementation, Manner 1 and Manner 2 may be combined, so that a correspondence between a 3D map point spatial location and a 3D map point descriptor can be determined based on the correspondence indication information during decompression. For example, for some 3D map points in the 3D map, the first correspondence indication information indicates a correspondence between a 3D map point spatial location and a 3D map point descriptor, and for the other 3D map points in the 3D map, the second correspondence indication information indicates a correspondence between a 3D map point spatial location and a 3D map point descriptor. For example, the 3D map includes at least one first 3D map point and at least one second 3D map point, and the correspondence indication information may include first correspondence indication information of the at least one first 3D map point and second correspondence indication information of the at least one second 3D map point.

It should be noted that the at least one first 3D map point and the at least one second 3D map point in the 3D map may be determined based on a fixed order or mode. For example, the first w 3D map points in the 3D map are all used as first 3D map points, and the last n-w 3D map points are all used as second 3D map points. A value of w may be a preset threshold. For another example, a mode 1 corresponds to that the first w 3D map points are all used as first 3D map points, and the last n-w 3D map points are all used as second 3D map points. A value of w may be a preset threshold. A mode 2 corresponds to that the first w 3D map points are all used as first 3D map points, the (w+1)^{th} to the s^{th} 3D map points are all used as second 3D map points, and the last n-s 3D map points are all used as first 3D map points. A value of s may be a preset threshold. The at least one first 3D map point and the at least one second 3D map point may alternatively be determined based on a fixed order or mode in another manner. For example, different modes correspond to different values of w. Examples are not described one by one in this embodiment of this application.

Optionally, in some embodiments, the correspondence indication information in Manner 3 may further include flag bit information, and the flag bit information indicates the first correspondence indication information of the at least one first 3D map point, or indicates the second correspondence indication information of the at least one second 3D map point. For example, the flag bit information is 1 bit, 0 represents the first correspondence indication information, that is, k corresponding to j, and 1 represents the second correspondence indication information, that is, j corresponding to k.

The correspondence indication information in Manner 1 to Manner 3 indicates a location that is of a 3D map point descriptor corresponding to a 3D map point spatial location and that is in the plurality of 3D map point descriptors or the plurality of re-sorted 3D map point descriptors, or indicates a location that is of a 3D map point spatial location corresponding to a 3D map point descriptor and that is in the plurality of 3D map point spatial locations or the plurality of re-sorted 3D map point spatial locations. Different from Manner 1 to Manner 3, this embodiment of this application further provides the following Manner 4. The correspondence indication information in Manner 4 indicates a location that is of a 3D map point descriptor corresponding to a 3D map point spatial location and that is in a reference sequence, and a location that is of a 3D map point spatial location corresponding to a 3D map point descriptor and that is in the reference sequence. That is, a correspondence is established between a 3D map point descriptor and a 3D map point spatial location based on the reference sequence.

Manner 4: The correspondence indication information may include third correspondence indication information of at least one 3D map point and fourth correspondence indication information of at least one 3D map point. The third correspondence indication information indicates a location that is of a 3D map point descriptor corresponding to at least one of the plurality of 3D map point spatial locations or the plurality of re-sorted 3D map point spatial locations and that is in a reference sequence. The fourth correspondence indication information indicates a location that is of a 3D map point spatial location corresponding to at least one of the plurality of 3D map point descriptors or the plurality of re-sorted 3D map point descriptors and that is in the reference sequence.

A location in this embodiment of this application is usually a location order in a reference sequence. For example, the foregoing location in the reference sequence is a location order that is of the 3D map point descriptor corresponding to the at least one 3D map point spatial location or of the 3D map point spatial location corresponding to the at least one 3D map point descriptor and that is in the reference sequence.

{1, 2, ..., j } represents the plurality of 3D map point spatial locations or the plurality of re-sorted 3D map point spatial locations, j E [1, n], and j represents a location order of a corresponding 3D map point spatial location. {1, 2, ..., k} represents the plurality of 3D map point descriptors or the plurality of re-sorted 3D map point descriptors, k ∈ [1, n], and k represents a location order of a corresponding 3D map point descriptor. {1, 2, ..., h} represents the reference sequence, h E [1, n], and h represents a location order that is of a 3D map point descriptor or a 3D map point spatial location and that is in the corresponding reference sequence.

The third correspondence indication information may include information indicating {*j* → h}, where {*j* → h} represents that a j^{th} location in the plurality of 3D map point spatial locations or the plurality of re-sorted 3D map point spatial locations corresponds to an h^{th} location in the reference sequence.

The fourth correspondence indication information may include information indicating {*k* → h}, where {*k* → h} represents that a k^{th} location in the plurality of 3D map point descriptors or the plurality of re-sorted 3D map point descriptors corresponds to an h^{th} location in the reference sequence.

For example, the plurality of re-sorted 3D map point spatial locations are P₄, P₂, P₅, P₃, and P₁, where j=1 represents a location order of P₄, j=2 represents a location order of P₂, j=3 represents a location order of P₅, j=4 represents a location order of P₃, and j=5 represents a location order of P₁. For example, the five re-sorted 3D map point descriptors are F₂, F₁, F₃, F₅, and F₄, where k=1 represents a location order of F₂, k=2 represents a location order of F₁, k=3 represents a location order of F₃, k=4 represents a location order of F₅, and k=5 represents a location order of F₄. For example, the reference sequence is F₁, F₂, F₃, F₄, and F₅, where h=1 represents a location order of F₁, h=2 represents a location order of F₂, h=3 represents a location order of F₃, h=4 represents a location order of F₄, and h=5 represents a location order of F₅.

The third correspondence indication information may be h=4, h=2, h=5, h=3, and h=1. To be specific, j=1 corresponds to h=4. In other words, P₄ corresponds to F₄. j=2 corresponds to h=2. In other words, P₂ corresponds to F₂. j=3 corresponds to h=5. In other words, P₅ corresponds to F₅. j=4 corresponds to h=3. In other words, P₃ corresponds to F₃. j=5 corresponds to h=1. In other words, P₁ corresponds to F₁. The fourth correspondence indication information may be h=2, h=1, h=3, h=5, and h=4. To be specific, k=1 corresponds to h=2. In other words, F₂ corresponds to P₂. k=2 corresponds to h=1. In other words, F₁ corresponds to P₁. k=3 corresponds to h=3. In other words, F₃ corresponds to P₃. k=4 corresponds to h=5. In other words, F₅ corresponds to P₅. k=5 corresponds to h=4. In other words, F₄ corresponds to P₄.

To be specific, the third correspondence indication information indicates h corresponding to j, and the fourth correspondence indication information indicates h corresponding to k, so that a correspondence between a 3D map point spatial location and a 3D map point descriptor can be determined based on the third correspondence indication information and the fourth correspondence indication information during decompression. That is, k corresponding to j is determined, or j corresponding to k is determined.

The following provides a method for decompressing a 3D map according to an embodiment of this application. For convenience, the method embodiments described below are all expressed as a combination of a series of action steps. However, a person skilled in the art should understand that specific implementations of the technical solutions of this application are not limited to an order of the described series of action steps.

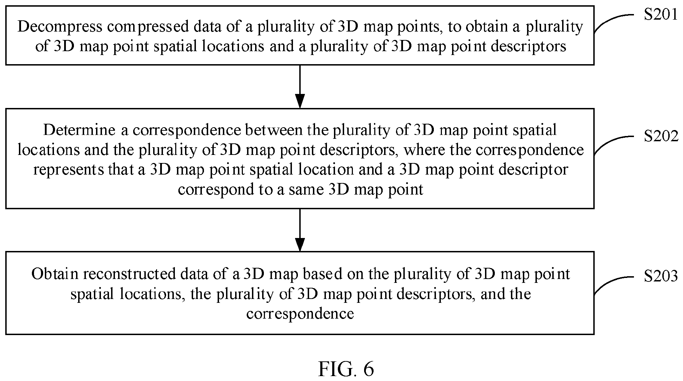

FIG. 6 is a schematic flowchart of a method for decompressing a 3D map according to an embodiment of this application. In some implementations, the method may be applied to an electronic device, or may be applied to a server. An execution body for performing the method for decompressing a 3D map in this embodiment of this application may also be referred to as a decompressor or a decoder. The method includes but is not limited to the following steps.

S201: Decompress compressed data of a plurality of 3D map points, to obtain a plurality of 3D map point spatial locations and a plurality of 3D map point descriptors.

Any one of the plurality of 3D map point spatial locations corresponds to one 3D map point in the 3D map. Any one of the plurality of 3D map point descriptors corresponds to one 3D map point in the 3D map.

The compressed data of the plurality of 3D map points in S201 may be compressed data obtained through compression processing in the embodiment shown in FIG. 5. Decompression in this embodiment may include but is not limited to processing such as reverse prediction.

Optionally, in some embodiments, a bitstream of the 3D map may be decapsulated to obtain the compressed data of the plurality of 3D map points in this embodiment. Decapsulation herein may include but is not limited to processing such as entropy decoding.

S202: Determine a correspondence between the plurality of 3D map point spatial locations and the plurality of 3D map point descriptors, where the correspondence represents that a 3D map point spatial location and a 3D map point descriptor correspond to a same 3D map point.

At the decompressor, the correspondence between the plurality of 3D map point spatial locations and the plurality of 3D map point descriptors that are obtained through decompression is determined, and a correspondence may be established between a 3D map point spatial location and a 3D map point descriptor based on the correspondence, so as to obtain reconstructed data of the 3D map.

In an implementable, for an explicit compression manner of the correspondence at the compressor, in this embodiment, the compressed data of the plurality of 3D map points is decompressed, to further obtain correspondence indication information. The correspondence indication information indicates a correspondence between a 3D map point spatial location and a 3D map point descriptor. The correspondence between the plurality of 3D map point spatial locations and the plurality of 3D map point descriptors may be determined based on the correspondence indication information.

In another implementable, for an implicit compression manner of the correspondence at the compressor, in this embodiment, the correspondence between the plurality of 3D map point spatial locations and the plurality of 3D map point descriptors may be determined based on an order of the plurality of 3D map point descriptors and the plurality of 3D map point spatial locations. Alternatively, the correspondence between the plurality of 3D map point spatial locations and the plurality of 3D map point descriptors is determined based on an order of the plurality of 3D map point spatial locations and the plurality of 3D map point descriptors.

For example, the plurality of 3D map point spatial locations obtained through decompression are P₄, P₂, P₅, P₃, and P₁, and the plurality of 3D map point descriptors obtained through decompression are F₂, F₁, F₃, F₅, and F₄. A correspondence may be established, based on a Morton code order (P₂, P₁, P₃, P₅, P₄) of the 3D map point spatial locations, between that a 3D map point spatial location and a 3D map point descriptor correspond to a same 3D map point. That is, {P₂, F₂}, {P₁, F₁}, {P₃, F₃}, {P₅, F₅}, and {P₄, F₄} are obtained.

It should be noted that an order of the plurality of 3D map point spatial locations may be the foregoing Morton code order, or may be another order, for example, a size order of one element of a 3D map point spatial location. Using an example in which a 3D map point spatial location includes coordinates of three dimensions: Pi=(xi, yi, zi), the order of the plurality of 3D map point spatial locations may be a size order of x-axis coordinates in the plurality of 3D map point spatial locations. Certainly, it may be understood that the order of the plurality of 3D map point spatial locations may alternatively be a size order of y-axis coordinates in the plurality of 3D map point spatial locations. Examples are not described one by one in this embodiment of this application.

For specific explanations and descriptions of different implementations of the correspondence indication information as in the foregoing Manner 1 to Manner 4, refer to the specific explanations and descriptions in the foregoing embodiment. Details are not described herein again.

S203: Obtain reconstructed data of the 3D map based on the plurality of 3D map point spatial locations, the plurality of 3D map point descriptors, and the correspondence.

The reconstructed data of the 3D map may be obtained based on the plurality of 3D map point spatial locations, the plurality of 3D map point descriptors, and the correspondence. The reconstructed data may be used for 3D map-based positioning.

In this embodiment, the correspondence between the plurality of 3D map point spatial locations and the plurality of 3D map point descriptors is determined, and the reconstructed data of the 3D map is obtained based on the plurality of 3D map point spatial locations, the plurality of 3D map point descriptors, and the correspondence. The compressor performs compression processing based on the correspondence, so that a data amount of the 3D map can be reduced, and when the compressed data is decompressed, the correspondence can be restored, to obtain the reconstructed data of the 3D map. When the data amount of the 3D map is reduced, storage space used for storing the 3D map or transmission resources used for transmitting the 3D map can be correspondingly reduced.

The following uses an example in which a server is used as an encoder and an electronic device is used as a decoder to describe the methods for compressing and decompressing a 3D map provided in embodiments of this application.

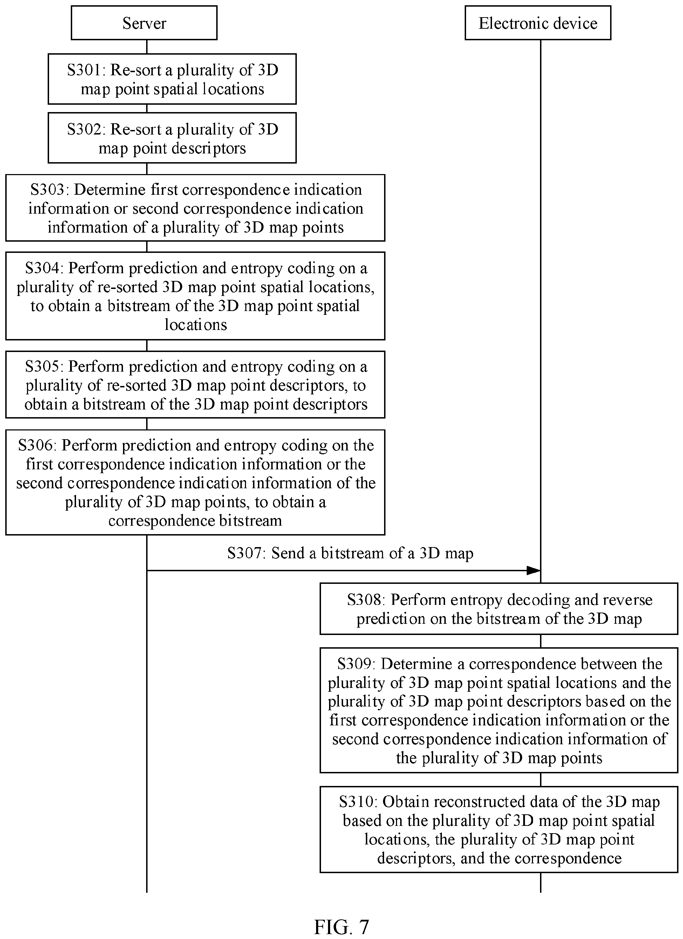

FIG. 7 is a schematic flowchart of a method for encoding and decoding a 3D map according to an embodiment of this application. This embodiment includes a server and an electronic device. In this embodiment, the server uses the correspondence indication information in the foregoing Manner 1 or Manner 2. The method includes but is not limited to the following steps.

S301: The server re-sorts a plurality of 3D map point spatial locations, to obtain a plurality of re-sorted 3D map point spatial locations.

{1, 2, ..., j} represents the plurality of re-sorted 3D map point spatial locations, j E [1, n], and j represents a location order of a corresponding 3D map point spatial location.

S302: The server re-sorts a plurality of 3D map point descriptors, to obtain a plurality of re-sorted 3D map point descriptors.

{1, 2, ..., k} represents the plurality of re-sorted 3D map point descriptors, k E [1, n], and k represents a location order of a corresponding 3D map point descriptor.

S303: The server determines first correspondence indication information or second correspondence indication information of a plurality of 3D map points based on a correspondence between the plurality of 3D map point spatial locations and the plurality of 3D map point descriptors, the plurality of re-sorted 3D map point spatial locations, and the plurality of re-sorted 3D map point descriptors.

For example, the correspondence indication information may be the foregoing first correspondence indication information. The first correspondence indication information may include information indicating {*j* → *k*}*,* where {*j* → *k*} represents that a j^{th} location in the plurality of 3D map point spatial locations or the plurality of re-sorted 3D map point spatial locations corresponds to a k^{th} location in the plurality of 3D map point descriptors or the plurality of re-sorted 3D map point descriptors.

For example, the correspondence indication information may be the foregoing second correspondence indication information. The second correspondence indication information may include information indicating {*k* → *j*}, where {*k* → *j*} represents that a k^{th} location in the plurality of 3D map point descriptors or the plurality of re-sorted 3D map point descriptors corresponds to a j^{th} location in the plurality of 3D map point spatial locations or the plurality of re-sorted 3D map point spatial locations.

S304: The server performs prediction and entropy coding on the plurality of re-sorted 3D map point spatial locations, to obtain a bitstream of the 3D map point spatial locations.

Specific implementations of prediction and entropy coding are not specifically limited in this embodiment of this application.

S305: The server performs prediction and entropy coding on the plurality of re-sorted 3D map point descriptors, to obtain a bitstream of the 3D map point descriptors.

Specific implementations of prediction and entropy coding are not specifically limited in this embodiment of this application.

S306: The server performs prediction and entropy coding on the first correspondence indication information or the second correspondence indication information of the plurality of 3D map points, to obtain a correspondence bitstream.

Specific implementations of prediction and entropy coding are not specifically limited in this embodiment of this application. For example, when the correspondence indication information is the first correspondence indication information, processing such as residual calculation and entropy coding may be performed on the k sequence, to reduce redundancy and obtain the correspondence bitstream. For another example, when the correspondence indication information may be the second correspondence indication information, processing such as residual calculation and entropy coding may be performed on the j sequence, to reduce redundancy and obtain the correspondence bitstream.

S307: The server sends a bitstream of the 3D map to the electronic device, where the bitstream of the 3D map includes the bitstream of the 3D map point spatial locations, the bitstream of the 3D map point descriptors, and the correspondence bitstream.

S308: The electronic device performs entropy decoding and reverse prediction on the bitstream of the 3D map, to obtain the plurality of 3D map point spatial locations, the plurality of 3D map point descriptors, and the first correspondence indication information or the second correspondence indication information of the plurality of 3D map points.

S309: The electronic device determines the correspondence between the plurality of 3D map point spatial locations and the plurality of 3D map point descriptors based on the first correspondence indication information or the second correspondence indication information of the plurality of 3D map points.

When the correspondence indication information is the first correspondence indication information, that is, the k sequence, a correspondence between a 3D map point spatial location and a 3D map point descriptor may be determined based on the k sequence. For another example, when the correspondence indication information may be the second correspondence indication information, that is, the j sequence, a correspondence between a 3D map point spatial location and a 3D map point descriptor may be determined based on the j sequence. For example, {Pᵢ, Fᵢ} is determined.

S310: The electronic device obtains the reconstructed data of the 3D map based on the plurality of 3D map point spatial locations, the plurality of 3D map point descriptors, and the correspondence.

In this embodiment, the server separately performs prediction and entropy coding on the plurality of re-sorted 3D map point spatial locations, the plurality of re-sorted 3D map point descriptors, and the correspondence indication information, to obtain the bitstream of the 3D map, so that a data amount of the 3D map can be reduced, and transmission resources used for transmitting the 3D map can be correspondingly reduced. The electronic device may restore, based on the correspondence indication information, the correspondence between the plurality of 3D map point descriptors and the plurality of 3D map point spatial locations that are obtained through entropy decoding and reverse prediction, to obtain the reconstructed data of the 3D map.

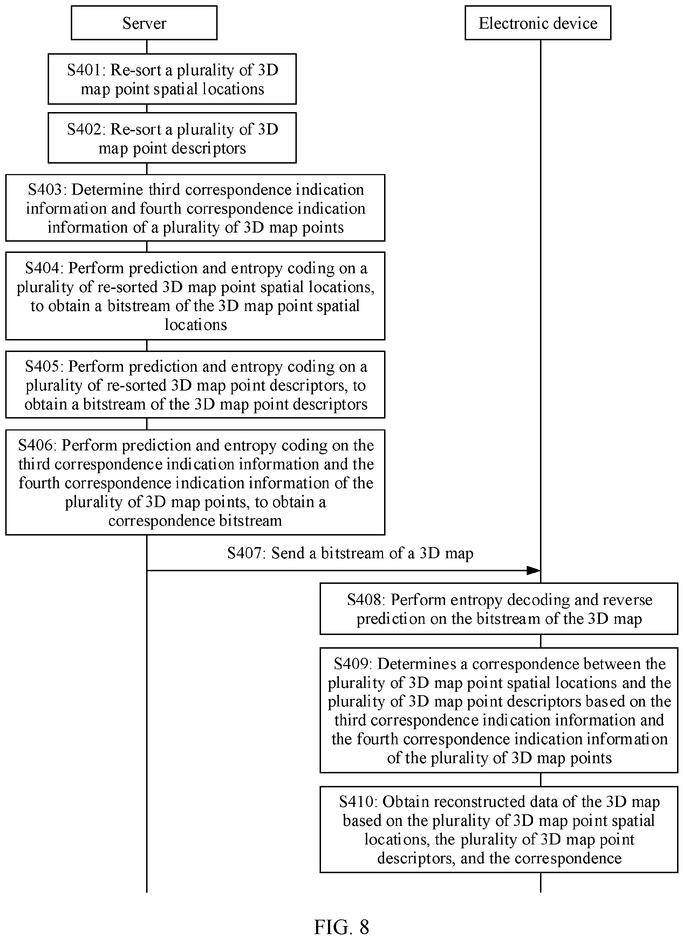

FIG. 8 is a schematic flowchart of a method for encoding and decoding a 3D map according to an embodiment of this application. This embodiment includes a server and an electronic device. In this embodiment, the server uses the correspondence indication information in the foregoing Manner 4. The method includes but is not limited to the following steps.

S401: The server re-sorts a plurality of 3D map point spatial locations, to obtain a plurality of re-sorted 3D map point spatial locations.

{1, 2, ..., j} represents the plurality of re-sorted 3D map point spatial locations, j E [1, n], and j represents a location order of a corresponding 3D map point spatial location.

S402: The server re-sorts a plurality of 3D map point descriptors, to obtain a plurality of re-sorted 3D map point descriptors.

{1, 2, ..., k} represents the plurality of re-sorted 3D map point descriptors, k E [1, n], and k represents a location order of a corresponding 3D map point descriptor.

S403: The server determines third correspondence indication information and fourth correspondence indication information of a plurality of 3D map points based on a correspondence between the plurality of 3D map point spatial locations and the plurality of 3D map point descriptors, the plurality of re-sorted 3D map point spatial locations, and the plurality of re-sorted 3D map point descriptors.

For example, the correspondence indication information may include the third correspondence indication information and the fourth correspondence indication information. The third correspondence indication information may include information indicating {*j* → h}, where {*j* → h} represents that a j^{th} location in the plurality of re-sorted 3D map point spatial locations corresponds to an h^{th} location in a reference sequence. The fourth correspondence indication information may include information indicating {*k* → h}, where {*k* → h} represents that a k^{th} location in the plurality of re-sorted 3D map point descriptors corresponds to an h^{th} location in the reference sequence.

S404: The server performs prediction and entropy coding on the plurality of re-sorted 3D map point spatial locations, to obtain a bitstream of the 3D map point spatial locations.

Specific implementations of prediction and entropy coding are not specifically limited in this embodiment of this application.

S405: The server performs prediction and entropy coding on the plurality of re-sorted 3D map point descriptors, to obtain a bitstream of the 3D map point descriptors.

Specific implementations of prediction and entropy coding are not specifically limited in this embodiment of this application.

S406: The server performs prediction and entropy coding on the third correspondence indication information and the fourth correspondence indication information of the plurality of 3D map points, to obtain a correspondence bitstream.

Specific implementations of prediction and entropy coding are not specifically limited in this embodiment of this application. For example, processing such as residual calculation and entropy coding may be performed on the {*j* → h} sequence and the {*k* → h} sequence, to reduce redundancy and obtain the correspondence bitstream.

S407: The server sends a bitstream of the 3D map to the electronic device, where the bitstream of the 3D map includes the bitstream of the 3D map point spatial locations, the bitstream of the 3D map point descriptors, and the correspondence bitstream.

S408: The electronic device performs entropy decoding and reverse prediction on the bitstream of the 3D map, to obtain the plurality of 3D map point spatial locations, the plurality of 3D map point descriptors, and the third correspondence indication information and the fourth correspondence indication information of the plurality of 3D map points.

S409: The electronic device determines the correspondence between the plurality of 3D map point spatial locations and the plurality of 3D map point descriptors based on the third correspondence indication information and the fourth correspondence indication information of the plurality of 3D map points.

A correspondence between a 3D map point spatial location and a 3D map point descriptor may be determined based on the {*j* → h} sequence and the {*k* → h} sequence. For example, {Pᵢ, Fᵢ} is determined.

S410: The electronic device obtains the reconstructed data of the 3D map based on the plurality of 3D map point spatial locations, the plurality of 3D map point descriptors, and the correspondence.

In this embodiment, the server separately performs prediction and entropy coding on the plurality of re-sorted 3D map point spatial locations, the plurality of re-sorted 3D map point descriptors, and the correspondence indication information, to obtain the bitstream of the 3D map, so that a data amount of the 3D map can be reduced, and transmission resources used for transmitting the 3D map can be correspondingly reduced. The electronic device may restore, based on the correspondence indication information, the correspondence between the plurality of 3D map point descriptors and the plurality of 3D map point spatial locations that are obtained through entropy decoding and reverse prediction, to obtain the reconstructed data of the 3D map.

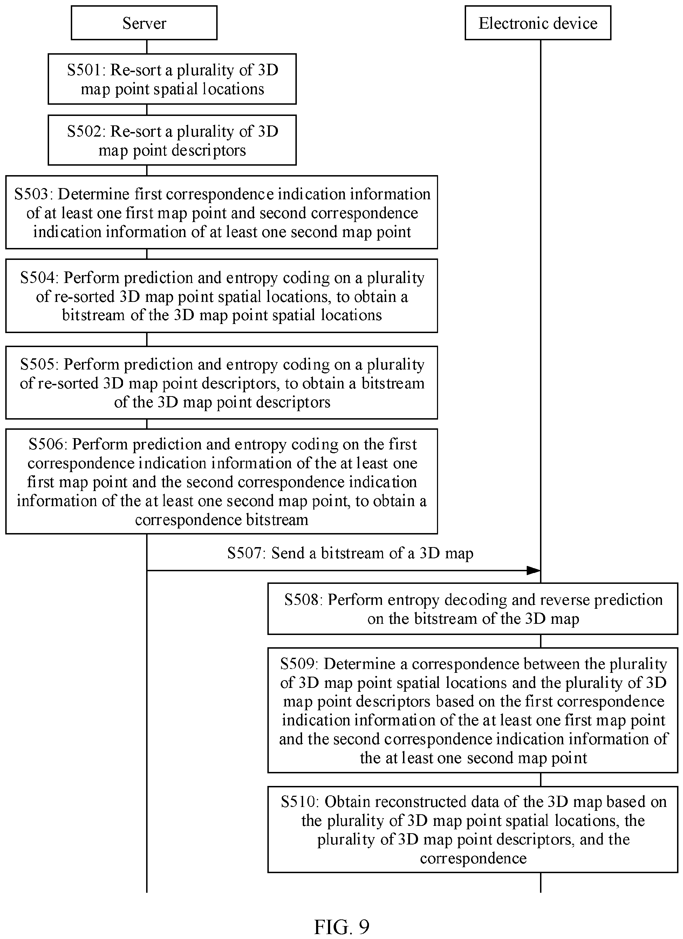

FIG. 9 is a schematic flowchart of a method for encoding and decoding a 3D map according to an embodiment of this application. This embodiment includes a server and an electronic device. In this embodiment, the server uses the correspondence indication information in the foregoing Manner 3. The method includes but is not limited to the following steps.

S501: The server re-sorts a plurality of 3D map point spatial locations, to obtain a plurality of re-sorted 3D map point spatial locations.

{1, 2, ..., j} represents the plurality of re-sorted 3D map point spatial locations, j E [1, n], and j represents a location order of a corresponding 3D map point spatial location.

S502: The server re-sorts a plurality of 3D map point descriptors, to obtain a plurality of re-sorted 3D map point descriptors.

{1, 2, ..., k} represents the plurality of re-sorted 3D map point descriptors, k ∈ [1, n], and k represents a location order of a corresponding 3D map point descriptor.

S503: The server determines first correspondence indication information of at least one first map point and second correspondence indication information of at least one second map point based on a correspondence between the plurality of 3D map point spatial locations and the plurality of 3D map point descriptors, the plurality of re-sorted 3D map point spatial locations, and the plurality of re-sorted 3D map point descriptors.

For example, the first correspondence indication information of any one of the plurality of 3D map points may include information indicating {*j* → *k*}, where {*j* → *k*} represents that a j^{th} location in the plurality of re-sorted 3D map point spatial locations corresponds to a k^{th} location in the plurality of re-sorted 3D map point descriptors. The second correspondence indication information of any one of the plurality of 3D map points may include information indicating {*k* → *j*}, where {*k* → *j*} represents that a k^{th} location in the plurality of re-sorted 3D map point descriptors corresponds to a j^{th} location in the plurality of re-sorted 3D map point spatial locations.

Any one of the plurality of 3D map points may be used as a first map point, and writes the first correspondence indication information of the map point or a residual of the first correspondence indication information into a bitstream, or any one of the plurality of 3D map points is used as a second map point, and writes the second correspondence indication information of the map point or a residual of the second correspondence indication information into the bitstream. In an embodiment, correspondence indication information written into the bitstream may be determined based on first correspondence indication information and second correspondence indication information of an encoded 3D map point.

Using a current 3D map point as an example, a first residual of the current 3D map point may be determined based on first correspondence indication information of the current 3D map point and first correspondence indication information of at least one compressed 3D map point. A second residual of the current 3D map point is determined based on second correspondence indication information of the current 3D map point and second correspondence indication information of the at least one compressed 3D map point. Correspondence indication information of the current map point is determined based on the first residual and the second residual.

For example, if the first residual is less than or equal to the second residual, it is determined that the correspondence indication information of the current map point is the first residual of the current map point. If the first residual is greater than the second residual, it is determined that the correspondence indication information of the current map point is the second residual of the current map point.

For example, for any map point, residuals between {*j* → *k*} and {*k* → *j*}, and a last group of {*j* → *k*} and {*k* → *j*} that have been written into the bitstream are calculated, and the smaller residual is used as the correspondence indication information and written into the bitstream. For example, a residual of k is written into the bitstream or a residual of j is written into the bitstream. The correspondence indication information may further include 1-bit flag bit information. For example, 0 represents the residual of k of the map point, and 1 represents the residual of j of the map point.

S504: The server performs prediction and entropy coding on the plurality of re-sorted 3D map point spatial locations, to obtain a bitstream of the 3D map point spatial locations.

Specific implementations of prediction and entropy coding are not specifically limited in this embodiment of this application.

S505: The server performs prediction and entropy coding on the plurality of re-sorted 3D map point descriptors, to obtain a bitstream of the 3D map point descriptors.

Specific implementations of prediction and entropy coding are not specifically limited in this embodiment of this application.

S506: The server performs prediction and entropy coding on the first correspondence indication information of the at least one first map point and the second correspondence indication information of the at least one second map point, to obtain a correspondence bitstream.

Specific implementations of prediction and entropy coding are not specifically limited in this embodiment of this application.

S507: The server sends a bitstream of the 3D map to the electronic device, where the bitstream of the 3D map includes the bitstream of the 3D map point spatial locations, the bitstream of the 3D map point descriptors, and the correspondence bitstream.

S508: The electronic device performs entropy decoding and reverse prediction on the bitstream of the 3D map, to obtain the plurality of 3D map point spatial locations, the plurality of 3D map point descriptors, and the first correspondence indication information of the at least one first map point and the second correspondence indication information of the at least one second map point.

S509: The electronic device determines a correspondence between the plurality of 3D map point spatial locations and the plurality of 3D map point descriptors based on the first correspondence indication information of the at least one first map point and the second correspondence indication information of the at least one second map point.

A correspondence between a 3D map point spatial location and a 3D map point descriptor may be determined based on the {*j* → k} sequence and the {*k* → j} sequence. For example, {Pᵢ, Fᵢ} is determined.

S510: The electronic device obtains the reconstructed data of the 3D map based on the plurality of 3D map point spatial locations, the plurality of 3D map point descriptors, and the correspondence.

In this embodiment, the server separately performs prediction and entropy coding on the plurality of re-sorted 3D map point spatial locations, the plurality of re-sorted 3D map point descriptors, and the correspondence indication information, to obtain the bitstream of the 3D map, so that a data amount of the 3D map can be reduced, and transmission resources used for transmitting the 3D map can be correspondingly reduced. The electronic device may restore, based on the correspondence indication information, the correspondence between the plurality of 3D map point descriptors and the plurality of 3D map point spatial locations that are obtained through entropy decoding and reverse prediction, to obtain the reconstructed data of the 3D map.

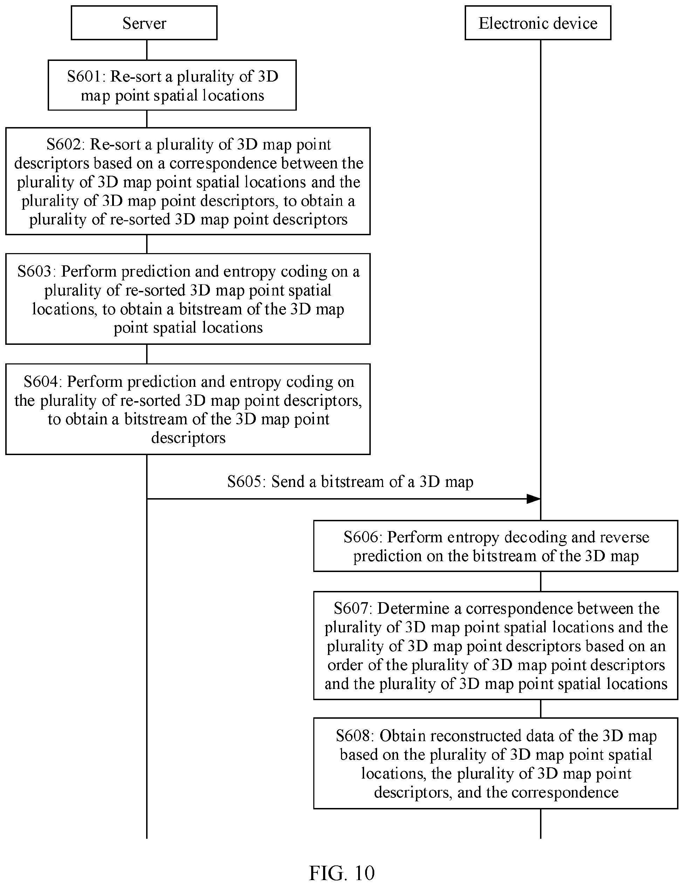

FIG. 10 is a schematic flowchart of a method for encoding and decoding a 3D map according to an embodiment of this application. This embodiment includes a server and an electronic device. In this embodiment, the server adopts the implicit compression manner of the foregoing correspondence. The method includes but is not limited to the following steps.

S601: The server re-sorts a plurality of 3D map point spatial locations, to obtain a plurality of re-sorted 3D map point spatial locations.

{1, 2, ..., j} represents the plurality of re-sorted 3D map point spatial locations, j E [1, n], and j represents a location order of a corresponding 3D map point spatial location.

S602: The server re-sorts a plurality of 3D map point descriptors based on a correspondence between the plurality of 3D map point spatial locations and the plurality of 3D map point descriptors, to obtain a plurality of re-sorted 3D map point descriptors.

{1, 2, ..., k} represents the plurality of re-sorted 3D map point descriptors, k E [1, n], and k represents a location order of a corresponding 3D map point descriptor.

A location order of the plurality of re-sorted 3D map point descriptors may be related to the 3D map point spatial locations corresponding to the plurality of 3D map point descriptors.

S603: The server performs prediction and entropy coding on the plurality of re-sorted 3D map point spatial locations, to obtain a bitstream of the 3D map point spatial locations.

Specific implementations of prediction and entropy coding are not specifically limited in this embodiment of this application.

S604: The server performs prediction and entropy coding on the plurality of re-sorted 3D map point descriptors, to obtain a bitstream of the 3D map point descriptors.

Specific implementations of prediction and entropy coding are not specifically limited in this embodiment of this application.

S605: The server sends a bitstream of the 3D map to the electronic device, where the bitstream of the 3D map includes a bitstream of the 3D map point spatial locations and a bitstream of the 3D map point descriptors.

S606: The electronic device performs entropy decoding and reverse prediction on the bitstream of the 3D map, to obtain the plurality of 3D map point spatial locations and the plurality of 3D map point descriptors.

S607: The electronic device determines the correspondence between the plurality of 3D map point spatial locations and the plurality of 3D map point descriptors based on an order of the plurality of 3D map point descriptors and the plurality of 3D map point spatial locations.

For example, the first 3D map point descriptor in the plurality of 3D map point descriptors obtained through entropy decoding and reverse prediction corresponds to a 3D map point spatial location with a largest x coordinate in the plurality of 3D map point spatial locations, the second 3D map point descriptor corresponds to a 3D map point spatial location with a second largest x coordinate in the plurality of 3D map point spatial locations, and so on, so that the correspondence between the plurality of 3D map point spatial locations and the plurality of 3D map point descriptors is determined. For example, {Pᵢ, Fᵢ} is determined.

S608: The electronic device obtains the reconstructed data of the 3D map based on the plurality of 3D map point spatial locations, the plurality of 3D map point descriptors, and the correspondence.

In this embodiment, the server separately performs prediction and entropy coding on the plurality of re-sorted 3D map point spatial locations and the plurality of re-sorted 3D map point descriptors, to obtain the bitstream of the 3D map, so that a data amount of the 3D map can be reduced, and transmission resources used for transmitting the 3D map can be correspondingly reduced. The server determines, by using the 3D map point spatial locations, an order of the re-sorted 3D map point descriptors, so that the electronic device can restore the correspondence between the plurality of 3D map point descriptors and the plurality of 3D map point spatial locations that are obtained through entropy decoding and reverse prediction, to obtain the reconstructed data of the 3D map.

It may be understood that, based on an implementation principle the same as that in the embodiment shown in FIG. 10, in some embodiments, an order of the 3D map point spatial locations may alternatively be determined based on the 3D map point descriptors. For example, the plurality of 3D map point spatial locations may be re-sorted based on the correspondence between the plurality of 3D map point spatial locations and the plurality of 3D map point descriptors, to obtain the plurality of re-sorted 3D map point spatial locations, and prediction and entropy coding are performed on the plurality of re-sorted 3D map point spatial locations, to obtain a bitstream of the 3D map point spatial locations. A technical effect thereof is the same as a technical effect of the embodiment shown in FIG. 10. Details are not described in this embodiment of this application again.

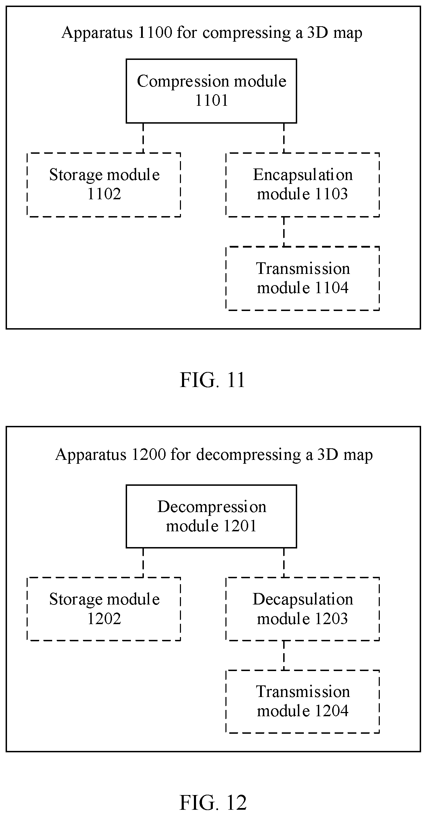

The foregoing describes in detail the method for compressing a 3D map and the method for decompressing a 3D map in embodiments of this application with reference to the accompanying drawings. The following describes an apparatus for compressing a 3D map and an apparatus for decompressing a 3D map in embodiments of this application with reference to FIG. 11 to FIG. 13. It should be understood that the apparatus for compressing a 3D map can perform the method for compressing a 3D map in embodiments of this application, and the apparatus for decompressing a 3D map can perform the method for decompressing a 3D map in embodiments of this application. To avoid unnecessary repetition, repeated descriptions are properly omitted when the following describes the apparatus for compressing a 3D map and the apparatus for decompressing a 3D map in embodiments of this application.

FIG. 11 is a schematic diagram of a structure of an apparatus for compressing a 3D map according to an embodiment of this application. As shown in FIG. 11, the apparatus 1100 for compressing a 3D map may include a compression module 1101 and a storage module 1102. Alternatively, the apparatus 1100 for compressing a 3D map may include a compression module 1101 and an encapsulation module 1103.

The compression module 1101 is configured to: obtain a plurality of 3D map point spatial locations and a plurality of 3D map point descriptors, where any one of the plurality of 3D map point spatial locations corresponds to one 3D map point in the 3D map, and any one of the plurality of 3D map point descriptors corresponds to one 3D map point in the 3D map; determine a correspondence between the plurality of 3D map point spatial locations and the plurality of 3D map point descriptors, where the correspondence represents that a 3D map point spatial location and a 3D map point descriptor correspond to a same 3D map point; and perform compression processing on the plurality of 3D map point spatial locations, the plurality of 3D map point descriptors, and the correspondence, or perform compression processing on the plurality of 3D map point spatial locations and the plurality of 3D map point descriptors based on the correspondence, to obtain compressed data of a plurality of 3D map points.

The storage module 1102 is configured to store the compressed data of the plurality of 3D map points. Alternatively, the encapsulation module 1103 is configured to encapsulate the compressed data of the plurality of 3D map points, to obtain a bitstream of the 3D map.

In some embodiments, the compression module 1101 is configured to: determine correspondence indication information based on the correspondence between the plurality of 3D map point spatial locations and the plurality of 3D map point descriptors, the plurality of 3D map point spatial locations or a plurality of re-sorted 3D map point spatial locations, and the plurality of 3D map point descriptors or a plurality of re-sorted 3D map point descriptors, where the correspondence indication information indicates a correspondence between a 3D map point spatial location and a 3D map point descriptor; and separately perform compression processing on the plurality of 3D map point spatial locations or the plurality of re-sorted 3D map point spatial locations, the plurality of 3D map point descriptors or the plurality of re-sorted 3D map point descriptors, and the correspondence indication information.

In some embodiments, the compression module 1101 is configured to: re-sort the plurality of 3D map point descriptors based on the correspondence between the plurality of 3D map point spatial locations and the plurality of 3D map point descriptors, to obtain a plurality of re-sorted 3D map point descriptors; and perform compression processing on the plurality of 3D map point spatial locations and the plurality of re-sorted 3D map point descriptors; or re-sort the plurality of 3D map point spatial locations based on the correspondence between the plurality of 3D map point spatial locations and the plurality of 3D map point descriptors, to obtain a plurality of re-sorted 3D map point spatial locations; and perform compression processing on the plurality of 3D map point descriptors and the plurality of re-sorted 3D map point spatial locations.

In some embodiments, the apparatus for compressing a 3D map may further include a transmission module 1104, configured to: receive 3D map request information sent by an electronic device, and send, to the electronic device in response to the 3D map request information, a bitstream that is of the 3D map and that corresponds to the 3D map request information; or send the bitstream of the 3D map to a server.

It should be noted that the apparatus 1100 for compressing a 3D map may perform the method for compressing a 3D map in the embodiment shown in FIG. 5, or perform related content of S301 to S306 in the embodiment shown in FIG. 7, or perform related content of S401 to S406 in the embodiment shown in FIG. 8, or perform related content of S501 to S506 in the embodiment shown in FIG. 9, or perform related content of S601 to S604 in the embodiment shown in FIG. 10. For a specific implementation principle and technical effects, refer to the specific explanation and description of the foregoing method embodiment. Details are not described herein again.

FIG. 12 is a schematic diagram of a structure of an apparatus for decompressing a 3D map according to an embodiment of this application. As shown in FIG. 12, the apparatus 1200 for decompressing a 3D map may include a decompression module 1201 and a storage module 1202. Alternatively, the apparatus 1200 for decompressing a 3D map may include a decompression module 1201 and a decapsulation module 1203.

The decompression module 1201 is configured to obtain compressed data of a plurality of 3D map points from the storage module 1202, or obtain the compressed data of the plurality of 3D map points by using the decapsulation module 1203.

The decompression module 1201 is further configured to: decompress the compressed data of the plurality of 3D map points, to obtain a plurality of 3D map point spatial locations and a plurality of 3D map point descriptors, where any one of the plurality of 3D map point spatial locations corresponds to one 3D map point in the 3D map, and any one of the plurality of 3D map point descriptors corresponds to one 3D map point in the 3D map; determine a correspondence between the plurality of 3D map point spatial locations and the plurality of 3D map point descriptors, where the correspondence represents that a 3D map point spatial location and a 3D map point descriptor correspond to a same 3D map point; and obtain reconstructed data of the 3D map based on the plurality of 3D map point spatial locations, the plurality of 3D map point descriptors, and the correspondence.

In some embodiments, the decompression module 1201 is configured to: decompress the compressed data of the plurality of 3D map points, to obtain the plurality of 3D map point spatial locations, the plurality of 3D map point descriptors, and correspondence indication information, where the correspondence indication information indicates a correspondence between a 3D map point spatial location and a 3D map point descriptor; and determine the correspondence between the plurality of 3D map point spatial locations and the plurality of 3D map point descriptors based on the correspondence indication information.

In some embodiments, the decompression module 1201 is configured to: determine the correspondence between the plurality of 3D map point spatial locations and the plurality of 3D map point descriptors based on an order of the plurality of 3D map point descriptors and the plurality of 3D map point spatial locations; or determine the correspondence between the plurality of 3D map point spatial locations and the plurality of 3D map point descriptors based on an order of the plurality of 3D map point spatial locations and the plurality of 3D map point descriptors.

In some embodiments, the decapsulation module 1203 is configured to decapsulate a bitstream of the 3D map, to obtain the compressed data of the plurality of 3D map points.

In some embodiments, the decompression apparatus further includes a transmission module 1204, configured to: send 3D map request information to a server, and receive a bitstream that is of the 3D map, that corresponds to the 3D map request information, and that is sent by the server; or receive the bitstream that is of the 3D map and that is sent by an electronic device.

It should be noted that the apparatus 1200 for decompressing a 3D map may perform the method for decompressing a 3D map in the embodiment shown in FIG. 6, or perform related content of S308 to S310 in the embodiment shown in FIG. 7, or perform related content of S408 to S410 in the embodiment shown in FIG. 8, or perform related content of S508 to S510 in the embodiment shown in FIG. 9, or perform related content of S606 to S608 in the embodiment shown in FIG. 10. For a specific implementation principle and technical effects, refer to the specific explanation and description of the foregoing method embodiment. Details are not described herein again.

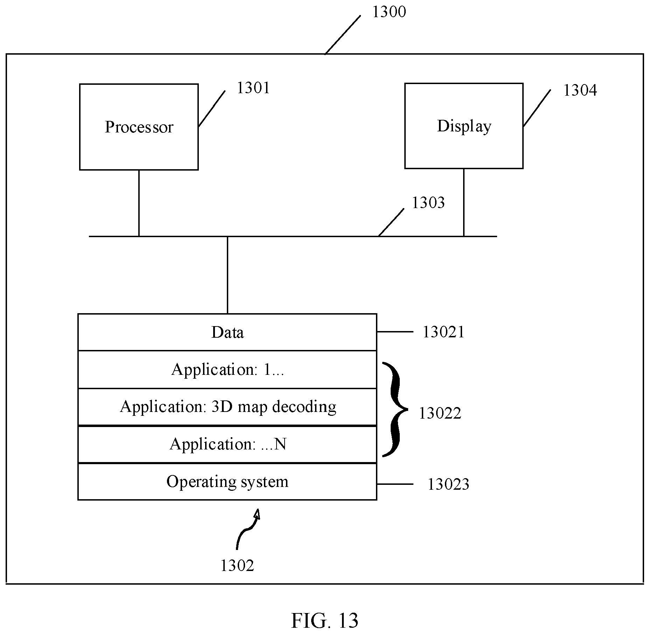

FIG. 13 is a schematic block diagram of an implementation of a decoding apparatus 1300 according to an embodiment of this application. The decoding apparatus 1300 may include a processor 1301, a memory 1302, and a bus system 1303. The processor 1301 and the memory 1302 are connected to each other through the bus system 1303. The memory 1302 is configured to store instructions. The processor 1301 is configured to execute the instructions stored in the memory 1302, to perform various methods for compressing or decompressing a 3D map in this application. To avoid repetition, details are not described herein again.

In this embodiment of this application, the processor 1301 may be a central processing unit (central processing unit, CPU), or the processor 1301 may be another general-purpose processor, a DSP, an ASIC, an FPGA or another programmable logic device, a discrete gate or a transistor logic device, a discrete hardware component, or the like. The general-purpose processor may be a microprocessor, or the processor may be any conventional processor or the like.

The memory 1302 may include a ROM device or a RAM device. Any other proper type of storage device may also be used as the memory 1302. The memory 1302 may include code and data 13021 that are accessed by the processor 1301 through the bus system 1303. The memory 1302 may further include an operating system 13023 and an application 13022. The application 13022 includes at least one program that allows the processor 1301 to perform the method for compressing or decompressing a 3D map in this application. For example, the application 13022 may include applications 1 to N, and further includes an application for compressing or decompressing a 3D map (referred to as a 3D map decoding application for short) that performs the method for compressing or decompressing a 3D map in this application.

In addition to a data bus, the bus system 1303 may include a power bus, a control bus, a status signal bus, and the like. However, for clarity of description, various buses are marked as the bus system 1303 in the figure.

Optionally, the decoding apparatus 1300 may further include one or more output devices, such as a display 1304. In an example, the display 1304 may be a touch display that combines a display and a touch unit that operably senses a touch input. The display 1304 may be connected to the processor 1301 through the bus system 1303.

It should be noted that the decoding apparatus 1300 may perform the method for compressing a 3D map in this application, and may also perform the method for decompressing a 3D map in this application.

A person skilled in the art can understand that the functions described with reference to various illustrative logical blocks, modules, and algorithm steps disclosed and described in this specification can be implemented by hardware, software, firmware, or any combination thereof. If the functions are implemented by software, the functions described with reference to the illustrative logical blocks, modules, and steps may be stored in or transmitted over a computer-readable medium as one or more instructions or code and executed by a hardware-based processing unit. The computer-readable medium may include a computer-readable storage medium corresponding to a tangible medium, such as a data storage medium, or any communication medium that facilitates transmission of a computer program from one place to another (for example, according to a communication protocol). In this manner, the computer-readable medium may generally correspond to (1) a non-transitory tangible computer-readable storage medium, or (2) a communication medium such as a signal or a carrier. The data storage medium may be any usable medium that can be accessed by one or more computers or one or more processors to retrieve instructions, code, and/or data structures for implementing the technologies described in this application. A computer program product may include a computer-readable medium.

In an example but not a limitation, such computer-readable storage media may include a RAM, a ROM, an EEPROM, a CD-ROM or another compact disc storage apparatus, a magnetic disk storage apparatus or another magnetic storage apparatus, a flash memory, or any other medium that can be used to store desired program code in a form of instructions or a data structure and that is accessible by a computer. In addition, any connection is properly referred to as a computer-readable medium. For example, if instructions are transmitted from a website, a server, or another remote source through a coaxial cable, an optical fiber, a twisted pair, a digital subscriber line (DSL), or a wireless technology such as infrared, radio, or microwave, the coaxial cable, the optical fiber, the twisted pair, the DSL, or the wireless technology such as infrared, radio, or microwave is included in a definition of the medium. However, it should be understood that the computer-readable storage medium and the data storage medium do not include connections, carriers, signals, or other transitory media, but actually mean non-transitory tangible storage media. Disks and discs used in this specification include a compact disc (CD), a laser disc, an optical disc, a digital versatile disc (DVD), and a Blu-ray disc. The disks usually reproduce data magnetically, whereas the discs reproduce data optically by using laser. Combinations of the foregoing items should also be included in the scope of the computer-readable media.

Instructions may be executed by one or more processors such as one or more digital signal processors (DSPs), general microprocessors, application-specific integrated circuits (ASICs), field-programmable gate arrays (FPGAs), or other equivalent integrated or discrete logic circuits. Therefore, the term "processor" used in this specification may refer to the foregoing structure, or any other structure that may be applied to implementation of the technologies described in this specification. In addition, in some aspects, the functions described with reference to the illustrative logical blocks, modules, and steps described in this specification may be provided within dedicated hardware and/or software modules configured for encoding and decoding, or may be incorporated into a combined codec. In addition, the technologies may be completely implemented in one or more circuits or logic elements.

The technologies in this application may be implemented in various apparatuses or devices, including a wireless handset, an integrated circuit (IC), or a set of ICs (for example, a chip set). Various components, modules, or units are described in this application to emphasize functional aspects of apparatuses configured to perform the disclosed technologies, but do not necessarily require realization by different hardware units. Actually, as described above, various units may be combined into a codec hardware unit in combination with proper software and/or firmware, or may be provided by interoperation hardware units (including the one or more processors described above).

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for compressing a 3D map, comprising:
obtaining a plurality of 3D map point spatial locations and a plurality of 3D map point descriptors, wherein any one of the plurality of 3D map point spatial locations corresponds to one 3D map point in the 3D map, and any one of the plurality of 3D map point descriptors corresponds to one 3D map point in the 3D map;
determining a correspondence between the plurality of 3D map point spatial locations and the plurality of 3D map point descriptors, wherein the correspondence represents that a 3D map point spatial location and a 3D map point descriptor correspond to a same 3D map point; and
performing compression processing on the plurality of 3D map point spatial locations, the plurality of 3D map point descriptors, and the correspondence, or performing compression processing on the plurality of 3D map point spatial locations and the plurality of 3D map point descriptors based on the correspondence, to obtain compressed data of a plurality of 3D map points.

2. The method according to claim 1, wherein the performing compression processing on the plurality of 3D map point spatial locations, the plurality of 3D map point descriptors, and the correspondence comprises:
determining correspondence indication information based on the correspondence between the plurality of 3D map point spatial locations and the plurality of 3D map point descriptors, the plurality of 3D map point spatial locations or a plurality of re-sorted 3D map point spatial locations, and the plurality of 3D map point descriptors or a plurality of re-sorted 3D map point descriptors, wherein the correspondence indication information indicates a correspondence between a 3D map point spatial location and a 3D map point descriptor; and separately performing compression processing on the plurality of 3D map point spatial locations or the plurality of re-sorted 3D map point spatial locations, the plurality of 3D map point descriptors or the plurality of re-sorted 3D map point descriptors, and the correspondence indication information.

3. The method according to claim 2, wherein the correspondence indication information comprises first correspondence indication information of at least one 3D map point; and
the first correspondence indication information indicates a location of a 3D map point descriptor in the plurality of 3D map point descriptors or the plurality of re-sorted 3D map point descriptors, wherein the 3D map point descriptor corresponds to at least one of the plurality of 3D map point spatial locations or the plurality of re-sorted 3D map point spatial locations.

4. The method according to claim 2, wherein the correspondence indication information comprises second correspondence indication information of at least one 3D map point; and
the second correspondence indication information indicates a location of a 3D map point spatial location in the plurality of 3D map point spatial locations or the plurality of re-sorted 3D map point spatial locations, wherein the 3D map point spatial location corresponds to at least one of the plurality of 3D map point descriptors or the plurality of re-sorted 3D map point descriptors.

5. The method according to claim 2, wherein the correspondence indication information comprises first correspondence indication information of at least one 3D map point and second correspondence indication information of at least one 3D map point;
the first correspondence indication information indicates a location of a 3D map point descriptor in the plurality of 3D map point descriptors or the plurality of re-sorted 3D map point descriptors, wherein the 3D map point descriptor corresponds to at least one of the plurality of 3D map point spatial locations or the plurality of re-sorted 3D map point spatial locations; and
the second correspondence indication information indicates a location of a 3D map point spatial location in the plurality of 3D map point spatial locations or the plurality of re-sorted 3D map point spatial locations, wherein the 3D map point spatial location corresponds to at least one of the plurality of 3D map point descriptors or the plurality of re-sorted 3D map point descriptors.

6. The method according to claim 5, wherein the plurality of 3D map points comprise at least one first 3D map point and at least one second 3D map point, and the correspondence indication information comprises first correspondence indication information of the at least one first 3D map point and second correspondence indication information of the at least one second 3D map point.

7. The method according to claim 6, wherein the correspondence indication information further comprises flag bit information, and the flag bit information indicates the first correspondence indication information of the at least one first 3D map point or the second correspondence indication information of the at least one second 3D map point.

8. The method according to claim 7, wherein the plurality of 3D map points comprise a current 3D map point, and the method further comprises:
determining a first residual of the current 3D map point based on first correspondence indication information of the current 3D map point and first correspondence indication information of at least one compressed 3D map point;
determining a second residual of the current 3D map point based on second correspondence indication information of the current 3D map point and second correspondence indication information of the at least one compressed 3D map point; and
determining correspondence indication information of the current map point based on the first residual and the second residual.

9. The method according to claim 8, wherein the determining correspondence indication information of the current map point based on the first residual and the second residual comprises:
if the first residual is less than or equal to the second residual, determining that the correspondence indication information of the current map point is the first residual of the current map point; or
if the first residual is greater than the second residual, determining that the correspondence indication information of the current map point is the second residual of the current map point.

10. The method according to claim 2, wherein the correspondence indication information comprises third correspondence indication information of at least one 3D map point and fourth correspondence indication information of at least one 3D map point;
the third correspondence indication information indicates a location that is of a 3D map point descriptor corresponding to at least one of the plurality of 3D map point spatial locations or the plurality of re-sorted 3D map point spatial locations and that is in a reference sequence; and
the fourth correspondence indication information indicates a location that is of a 3D map point spatial location corresponding to at least one of the plurality of 3D map point descriptors or the plurality of re-sorted 3D map point descriptors and that is in the reference sequence.

11. The method according to claim 1, wherein the performing compression processing on the plurality of 3D map point spatial locations and the plurality of 3D map point descriptors based on the correspondence comprises:
re-sorting the plurality of 3D map point descriptors based on the correspondence between the plurality of 3D map point spatial locations and the plurality of 3D map point descriptors, to obtain a plurality of re-sorted 3D map point descriptors; and performing compression processing on the plurality of 3D map point spatial locations and the plurality of re-sorted 3D map point descriptors; or
re-sorting the plurality of 3D map point spatial locations based on the correspondence between the plurality of 3D map point spatial locations and the plurality of 3D map point descriptors, to obtain a plurality of re-sorted 3D map point spatial locations; and performing compression processing on the plurality of 3D map point descriptors and the plurality of re-sorted 3D map point spatial locations.

12. The method according to any one of claims 1 to 11, wherein the method further comprises:
encapsulating the compressed data of the plurality of 3D map points, to obtain a bitstream of the 3D map.

13. The method according to claim 12, wherein the method further comprises:
receiving 3D map request information sent by an electronic device, and sending, to the electronic device in response to the 3D map request information, a bitstream that is of the 3D map and that corresponds to the 3D map request information; or
sending the bitstream of the 3D map to a server.

14. A method for decompressing a 3D map, comprising:
decompressing compressed data of a plurality of 3D map points, to obtain a plurality of 3D map point spatial locations and a plurality of 3D map point descriptors, wherein any one of the plurality of 3D map point spatial locations corresponds to one 3D map point in the 3D map, and any one of the plurality of 3D map point descriptors corresponds to one 3D map point in the 3D map;
determining a correspondence between the plurality of 3D map point spatial locations and the plurality of 3D map point descriptors, wherein the correspondence represents that a 3D map point spatial location and a 3D map point descriptor correspond to a same 3D map point; and
obtaining reconstructed data of the 3D map based on the plurality of 3D map point spatial locations, the plurality of 3D map point descriptors, and the correspondence.

15. The method according to claim 14, wherein the decompressing compressed data of a plurality of 3D map points, to obtain a plurality of 3D map point spatial locations and a plurality of 3D map point descriptors comprises:
decompressing the compressed data of the plurality of 3D map points, to obtain the plurality of 3D map point spatial locations, the plurality of 3D map point descriptors, and correspondence indication information, wherein the correspondence indication information indicates a correspondence between a 3D map point spatial location and a 3D map point descriptor; and
the determining a correspondence between the plurality of 3D map point spatial locations and the plurality of 3D map point descriptors comprises:
determining the correspondence between the plurality of 3D map point spatial locations and the plurality of 3D map point descriptors based on the correspondence indication information.

16. The method according to claim 15, wherein the correspondence indication information comprises first correspondence indication information of at least one 3D map point; and
the first correspondence indication information indicates a location that is of a 3D map point descriptor corresponding to at least one of the plurality of 3D map point spatial locations and that is in the plurality of 3D map point descriptors.

17. The method according to claim 15, wherein the correspondence indication information comprises second correspondence indication information of at least one 3D map point; and
the second correspondence indication information indicates a location that is of a 3D map point spatial location corresponding to at least one of the plurality of 3D map point descriptors and that is in the plurality of 3D map point spatial locations.

18. The method according to claim 15, wherein the correspondence indication information comprises first correspondence indication information of at least one 3D map point and second correspondence indication information of at least one 3D map point;
the first correspondence indication information indicates a location that is of a 3D map point descriptor corresponding to at least one of the plurality of 3D map point spatial locations and that is in the plurality of 3D map point descriptors; and
the second correspondence indication information indicates a location that is of a 3D map point spatial location corresponding to at least one of the plurality of 3D map point descriptors and that is in the plurality of 3D map point spatial locations.

19. The method according to claim 18, wherein the plurality of 3D map points comprise at least one first 3D map point and at least one second 3D map point, and the correspondence indication information comprises first correspondence indication information of the at least one first 3D map point and second correspondence indication information of the at least one second 3D map point.

20. The method according to claim 19, wherein the correspondence indication information further comprises flag bit information, and the flag bit information indicates the first correspondence indication information of the at least one first 3D map point or the second correspondence indication information of the at least one second 3D map point.

21. The method according to claim 15, wherein the correspondence indication information comprises third correspondence indication information of at least one 3D map point and fourth correspondence indication information of at least one 3D map point;
the third correspondence indication information indicates a location that is of a 3D map point descriptor corresponding to at least one of the plurality of 3D map point spatial locations and that is in a reference sequence; and
the fourth correspondence indication information indicates a location that is of a 3D map point spatial location corresponding to at least one of the plurality of 3D map point descriptors and that is in the reference sequence.

22. The method according to claim 14, wherein the determining a correspondence between the plurality of 3D map point spatial locations and the plurality of 3D map point descriptors comprises:
determining the correspondence between the plurality of 3D map point spatial locations and the plurality of 3D map point descriptors based on an order of the plurality of 3D map point descriptors and the plurality of 3D map point spatial locations; or
determining the correspondence between the plurality of 3D map point spatial locations and the plurality of 3D map point descriptors based on an order of the plurality of 3D map point spatial locations and the plurality of 3D map point descriptors.

23. The method according to any one of claims 14 to 22, wherein the method further comprises:
decapsulating a bitstream of the 3D map, to obtain the compressed data of the plurality of 3D map points.

24. The method according to claim 23, wherein the method further comprises:
sending 3D map request information to a server, and receiving a bitstream that is of the 3D map, that corresponds to the 3D map request information, and that is sent by the server; or
receiving the bitstream that is of the 3D map and that is sent by an electronic device.

25. An apparatus for compressing a 3D map, comprising:
a compression module, configured to: obtain a plurality of 3D map point spatial locations and a plurality of 3D map point descriptors, wherein any one of the plurality of 3D map point spatial locations corresponds to one 3D map point in the 3D map, and any one of the plurality of 3D map point descriptors corresponds to one 3D map point in the 3D map; determine a correspondence between the plurality of 3D map point spatial locations and the plurality of 3D map point descriptors, wherein the correspondence represents that a 3D map point spatial location and a 3D map point descriptor correspond to a same 3D map point; and perform compression processing on the plurality of 3D map point spatial locations, the plurality of 3D map point descriptors, and the correspondence, or perform compression processing on the plurality of 3D map point spatial locations and the plurality of 3D map point descriptors based on the correspondence, to obtain compressed data of a plurality of 3D map points; and
a storage module, configured to store the compressed data of the plurality of 3D map points; or an encapsulation module, configured to encapsulate the compressed data of the plurality of 3D map points, to obtain a bitstream of the 3D map.

26. The apparatus according to claim 25, wherein the compression module is configured to: determine correspondence indication information based on the correspondence between the plurality of 3D map point spatial locations and the plurality of 3D map point descriptors, the plurality of 3D map point spatial locations or a plurality of re-sorted 3D map point spatial locations, and the plurality of 3D map point descriptors or a plurality of re-sorted 3D map point descriptors, wherein the correspondence indication information indicates a correspondence between a 3D map point spatial location and a 3D map point descriptor; and separately perform compression processing on the plurality of 3D map point spatial locations or the plurality of re-sorted 3D map point spatial locations, the plurality of 3D map point descriptors or the plurality of re-sorted 3D map point descriptors, and the correspondence indication information.

27. The apparatus according to claim 26, wherein the correspondence indication information comprises first correspondence indication information of at least one 3D map point; and
the first correspondence indication information indicates a location of a 3D map point descriptor in the plurality of 3D map point descriptors or the plurality of re-sorted 3D map point descriptors, wherein the 3D map point descriptor corresponds to at least one of the plurality of 3D map point spatial locations or the plurality of re-sorted 3D map point spatial locations.

28. The apparatus according to claim 26, wherein the correspondence indication information comprises second correspondence indication information of at least one 3D map point; and
the second correspondence indication information indicates a location of a 3D map point spatial location in the plurality of 3D map point spatial locations or the plurality of re-sorted 3D map point spatial locations, wherein the 3D map point spatial location corresponds to at least one of the plurality of 3D map point descriptors or the plurality of re-sorted 3D map point descriptors.

29. The apparatus according to claim 26, wherein the correspondence indication information comprises first correspondence indication information of at least one 3D map point and second correspondence indication information of at least one 3D map point;
the first correspondence indication information indicates a location of a 3D map point descriptor in the plurality of 3D map point descriptors or the plurality of re-sorted 3D map point descriptors, wherein the 3D map point descriptor corresponds to at least one of the plurality of 3D map point spatial locations or the plurality of re-sorted 3D map point spatial locations; and
the second correspondence indication information indicates a location of a 3D map point spatial location in the plurality of 3D map point spatial locations or the plurality of re-sorted 3D map point spatial locations, wherein the 3D map point spatial location corresponds to at least one of the plurality of 3D map point descriptors or the plurality of re-sorted 3D map point descriptors.

30. The apparatus according to claim 29, wherein the plurality of 3D map points comprise at least one first 3D map point and at least one second 3D map point, and the correspondence indication information comprises first correspondence indication information of the at least one first 3D map point and second correspondence indication information of the at least one second 3D map point.

31. The apparatus according to claim 30, wherein the correspondence indication information further comprises flag bit information, and the flag bit information indicates the first correspondence indication information of the at least one first 3D map point or the second correspondence indication information of the at least one second 3D map point.

32. The apparatus according to claim 31, wherein the plurality of 3D map points comprise a current 3D map point, and the compression module is further configured to: determine a first residual of the current 3D map point based on first correspondence indication information of the current 3D map point and first correspondence indication information of at least one compressed 3D map point; determine a second residual of the current 3D map point based on second correspondence indication information of the current 3D map point and second correspondence indication information of the at least one compressed 3D map point; and determine correspondence indication information of the current map point based on the first residual and the second residual.

33. The apparatus according to claim 32, wherein the compression module is configured to: if the first residual is less than or equal to the second residual, determine that the correspondence indication information of the current map point is the first residual of the current map point; or if the first residual is greater than the second residual, determine that the correspondence indication information of the current map point is the second residual of the current map point.

34. The apparatus according to claim 26, wherein the correspondence indication information comprises third correspondence indication information of at least one 3D map point and fourth correspondence indication information of at least one 3D map point;
the third correspondence indication information indicates a location that is of a 3D map point descriptor corresponding to at least one of the plurality of 3D map point spatial locations or the plurality of re-sorted 3D map point spatial locations and that is in a reference sequence; and
the fourth correspondence indication information indicates a location that is of a 3D map point spatial location corresponding to at least one of the plurality of 3D map point descriptors or the plurality of re-sorted 3D map point descriptors and that is in the reference sequence.

35. The apparatus according to claim 25, wherein the compression module is configured to: re-sort the plurality of 3D map point descriptors based on the correspondence between the plurality of 3D map point spatial locations and the plurality of 3D map point descriptors, to obtain a plurality of re-sorted 3D map point descriptors; and perform compression processing on the plurality of 3D map point spatial locations and the plurality of re-sorted 3D map point descriptors; or re-sort the plurality of 3D map point spatial locations based on the correspondence between the plurality of 3D map point spatial locations and the plurality of 3D map point descriptors, to obtain a plurality of re-sorted 3D map point spatial locations; and perform compression processing on the plurality of 3D map point descriptors and the plurality of re-sorted 3D map point spatial locations.

36. The apparatus according to any one of claims 25 to 35, wherein the apparatus further comprises a transmission module, configured to: receive 3D map request information sent by an electronic device, and send, to the electronic device in response to the 3D map request information, a bitstream that is of the 3D map and that corresponds to the 3D map request information; or send the bitstream of the 3D map to a server.

37. An apparatus for decompressing a 3D map, comprising:
a decompression module, configured to obtain compressed data of a plurality of 3D map points from a storage module, or obtain the compressed data of the plurality of 3D map points by using a decapsulation module; and
the decompression module is further configured to: decompress the compressed data of the plurality of 3D map points, to obtain a plurality of 3D map point spatial locations and a plurality of 3D map point descriptors, wherein any one of the plurality of 3D map point spatial locations corresponds to one 3D map point in the 3D map, and any one of the plurality of 3D map point descriptors corresponds to one 3D map point in the 3D map; determine a correspondence between the plurality of 3D map point spatial locations and the plurality of 3D map point descriptors, wherein the correspondence represents that a 3D map point spatial location and a 3D map point descriptor correspond to a same 3D map point; and obtain reconstructed data of the 3D map based on the plurality of 3D map point spatial locations, the plurality of 3D map point descriptors, and the correspondence.

38. The apparatus according to claim 37, wherein the decompression module is configured to: decompress the compressed data of the plurality of 3D map points, to obtain the plurality of 3D map point spatial locations, the plurality of 3D map point descriptors, and correspondence indication information, wherein the correspondence indication information indicates a correspondence between a 3D map point spatial location and a 3D map point descriptor; and determine the correspondence between the plurality of 3D map point spatial locations and the plurality of 3D map point descriptors based on the correspondence indication information.

39. The apparatus according to claim 38, wherein the correspondence indication information comprises first correspondence indication information of at least one 3D map point; and
the first correspondence indication information indicates a location that is of a 3D map point descriptor corresponding to at least one of the plurality of 3D map point spatial locations and that is in the plurality of 3D map point descriptors.

40. The apparatus according to claim 38, wherein the correspondence indication information comprises second correspondence indication information of at least one 3D map point; and
the second correspondence indication information indicates a location that is of a 3D map point spatial location corresponding to at least one of the plurality of 3D map point descriptors and that is in the plurality of 3D map point spatial locations.

41. The apparatus according to claim 38, wherein the correspondence indication information comprises first correspondence indication information of at least one 3D map point and second correspondence indication information of at least one 3D map point;
the first correspondence indication information indicates a location that is of a 3D map point descriptor corresponding to at least one of the plurality of 3D map point spatial locations and that is in the plurality of 3D map point descriptors; and
the second correspondence indication information indicates a location that is of a 3D map point spatial location corresponding to at least one of the plurality of 3D map point descriptors and that is in the plurality of 3D map point spatial locations.

42. The apparatus according to claim 41, wherein the plurality of 3D map points comprise at least one first 3D map point and at least one second 3D map point, and the correspondence indication information comprises first correspondence indication information of the at least one first 3D map point and second correspondence indication information of the at least one second 3D map point.

43. The apparatus according to claim 42, wherein the correspondence indication information further comprises flag bit information, and the flag bit information indicates the first correspondence indication information of the at least one first 3D map point or the second correspondence indication information of the at least one second 3D map point.

44. The apparatus according to claim 38, wherein the correspondence indication information comprises third correspondence indication information of at least one 3D map point and fourth correspondence indication information of at least one 3D map point;
the third correspondence indication information indicates a location that is of a 3D map point descriptor corresponding to at least one of the plurality of 3D map point spatial locations and that is in a reference sequence; and
the fourth correspondence indication information indicates a location that is of a 3D map point spatial location corresponding to at least one of the plurality of 3D map point descriptors and that is in the reference sequence.

45. The apparatus according to claim 37, wherein the decompression module is configured to: determine the correspondence between the plurality of 3D map point spatial locations and the plurality of 3D map point descriptors based on an order of the plurality of 3D map point descriptors and the plurality of 3D map point spatial locations; or determine the correspondence between the plurality of 3D map point spatial locations and the plurality of 3D map point descriptors based on an order of the plurality of 3D map point spatial locations and the plurality of 3D map point descriptors.

46. The apparatus according to any one of claims 37 to 45, wherein the decapsulation module is configured to decapsulate a bitstream of the 3D map, to obtain the compressed data of the plurality of 3D map points.

47. The apparatus according to claim 46, wherein the apparatus further comprises a transmission module, configured to: send 3D map request information to a server, and receive a bitstream that is of the 3D map, that corresponds to the 3D map request information, and that is sent by the server; or receive the bitstream that is of the 3D map and that is sent by an electronic device.

48. An apparatus for compressing a 3D map, comprising:
one or more processors; and
a memory, configured to store one or more programs, wherein
when the one or more programs are executed by the one or more processors, the one or more processors are enabled to implement the method according to any one of claims 1 to 13.

49. An apparatus for decompressing a 3D map, comprising:
one or more processors; and
a memory, configured to store one or more programs, wherein
when the one or more programs are executed by the one or more processors, the one or more processors are enabled to implement the method according to any one of claims 14 to 24.

50. A computer-readable storage medium, comprising a computer program, wherein when the computer program is executed on a computer, the computer is enabled to perform the method according to any one of claims 1 to 24.
